# EUROPÄISCHE PATENTANMELDUNG

(11) **EP 3 915 377 A1**
(43) Veröffentlichungstag der Anmeldung: **01.12.2021**
(21) Anmeldenummer: 20211164.7
(22) Anmeldetag: 02.12.2020
(51) Int. Cl.: A01N 59/16, A01N 59/00, A01N 25/08, A01N 25/34, A01P 1/00, C09D 5/14

(54) **ANTISEPTISCHE HYBRIDE AUFLAGE ZUR LOKALEN WUNDBEHANDLUNG**

(30) Priorität: 26.05.2020 EP 20176476
(71) Anmelder: AgXX Intellectual Property Holding GmbH, 14169 Berlin (DE)
(72) Erfinder: Landau, Uwe, 14169 Berlin (DE); Meyer, Carsten, 10589 Berlin (DE); Wagner, Olaf, 12163 Berlin (DE); Abul-Ella, Ayad, 14057 Berlin (DE)
(74) Vertreter: Remus, Alvaro Johannes

(57) **Zusammenfassung**

Der Erfindung betrifft eine hybride Wundauflage zur Behandlung von Wunden der menschlichen oder tierischen Haut, die mindestens ein Trägermaterial 2 umfasst, das zumindest teilweise mit mindestens einem antiseptischen Mittel versehen ist. Auf dem Trägermaterial 2 kann beispielsweise eine erste, weitgehend geschlossene Metallschicht 4 aufgetragen sein. Über der Metallschicht 4 kann ein zweites Metall als sehr dünne, nanoporöse Schicht 5 aufgetragen sein. Erste 4 und zweite Schicht 5 über dem Trägermaterial 3 sind vorzugsweise so aufgebaut, dass Sauerstoff aus der feuchten Umgebung an dem kathodischen Teil des aufgebrachten antiseptischen Mittels der Hybridoberfläche reduziert wird und Sauerstoffradikale gebildet werden, die an die Wunde und an ein optionales saugfähiges Vliesmaterial 6 gelangen und dort ihre antiseptische bzw. antimikrobielle Wirkung entfalten können. Die Erfindung betrifft ferner ein Verfahren zur Herstellung einer hybriden Wundauflage mit antiseptischer Wirkung sowie eine nach diesem Verfahren hergestellte Wundauflage.

## Beschreibung

### Gebiet der Erfindung

Der Erfindung betrifft eine hybride Wundauflage zur Behandlung von Wunden der menschlichen oder tierischen Haut, die mindestens ein Trägermaterial umfasst, das zumindest teilweise mit mindestens einem antiseptischen Mittel versehen ist. Die Erfindung betrifft ferner ein Verfahren zur Herstellung einer hybriden Wundauflage mit antiseptischer Wirkung sowie eine nach diesem Verfahren hergestellte Wundauflage.

### Hintergrund der Erfindung

Wunden entstehen durch Schädigung, Zerstörung oder Durchtrennung der Haut und des darunter liegenden Gewebes. Eine gute Wundheilung ist wichtig, um die Schutzfunktion der Haut wiederherzustellen. Der Körper kann Wunden meist von selbst heilen. Dabei wird das zerstörte Gewebe durch neues ersetzt. Je größer und tiefer eine Wunde ist, desto länger dauert die Heilung der Wunde. Auch das Risiko für Komplikationen, z. B. einer Infektion, ist bei größeren Wunden höher. Wenn die Wundheilung gestört ist, können chronische Wunden entstehen. Neben chronischen Wunden infizieren sich oft auch akute, traumatische Verletzungen. Das Eindringen von und eine Infektion mit pathogenen Keimen kann auch bei Verletzungen der Haut durch chirurgische Eingriffe oder bei nur einfachen Verletzungen nicht ausgeschlossen werden. Dass alle offenen Wunden mit Mikroorganismen kontaminiert sind, bedeutet nicht zwangsläufig, dass Infektionen unausweichlich sind. Aber Wundinfektionen sind ein wesentlicher Faktor für eine verzögerte Heilung [Edwards und Harding 2004]. Die Wundheilung ist ein komplexer Prozess. Das Immunsystem antwortet auf Verletzungen, indem sich die Wunde zunächst entzündet. Der betroffene Bereich schwillt an und schmerzt, wird warm und funktioniert kaum noch. Außerdem rötet sich die Haut rings um die Verletzung, weil sie gut durchblutet wird. Mit dem Blut werden Stoffe herangeführt, die einerseits die Entzündung anfachen, z. B. durch den Botenstoff Zytokin Interleukin-6, als auch solche, die zum Stoppen der Blutung zum Verschluss der Wunde und schließlich der Heilung beitragen. Die Wundheilung verläuft in drei ineinandergreifenden Phasen: (a) Reinigungs- oder Exsudationsphase, (b) Granulations- oder Proliferationsphase und (c) Epithelisierungsphase. Bisherige Theorien zur Wundheilung besagen, dass sich die Zellen der Wundränder oder unmittelbar dahinter liegender Bereiche teilen und die Haut so in die Wunde hineinwächst. Neuere Erkenntnisse gehen aber davon aus, dass sich die Zellen von allen Seiten neu bilden und unter der intakten Haut hindurch auf die Wunde zu schieben. Dort werden sie von nachdrückenden Zellen nach oben gedrückt und reifen zu schildförmigen Zellen aus [Safferling et. al. 2013]. Insgesamt handelt es sich bei der Entzündung um ein komplexes Geschehen mit zahlreichen sich überlappenden Prozesswegen, die noch keineswegs aufgeklärt sind.

Die Behandlung und Heilung von bakteriell kontaminierter Haut und Wunden bzw. von infizierter Haut oder Wunden stellt daher noch eine große Herausforderung für die Medizin und Wissenschaft dar. Wundinfektionen betreffen eine große Anzahl von Menschen (z. B. 2009: 6,5 Mio. Patienten in den USA) und ihre Behandlung verschlingt einen erheblichen Teil der jährlichen Gesundheitskosten (2009: mehr als 25 Milliarden US-Dollar in den USA) [Sen et. al. 2009].

### Stand der Technik

Ausgelöst durch weltweite Zunahme an Antibiotikaresistenzen besteht ein dringender Bedarf an alternativen Substanzen, um einen störungsfreien Verlauf der Wundheilung zu erleichtern und Infektionen effektiv zu bekämpfen. Laut Konsenserklärung zur Wundantiseptik und diversen Empfehlungen vieler medizinischer Fachgesellschaften gelten Lokalantibiotika zur Wundbehandlung als obsolet, da neben einer Resistenzbildung auch lokale Unverträglichkeiten bis hin zu allergischen Reaktionen auftreten können. Problematisch ist auch das oft die Zellproliferation hemmende und zytotoxische Potenzial vieler Antiseptika, das insbesondere bei der Applikation in einer chronischen Wunde die ohnehin verzögerte Wundheilung weiter behindert. Bei infektionsgefährdeten bzw. kritisch kolonisierten und infizierten Wunden wird bei jedem Verbandswechsel eine Spülung mit Lokalantiseptika wie Octenidin- oder Polyhexanid (PHMB)-Lösung empfohlen. Beim Einsatz von Wundauflagen mit keimreduzierendem Wirkstoff ist eine zusätzliche Desinfektion mit Octenidin oder Polihexanid nicht sinnvoll, teilweise auch laut Herstellerangaben nicht gestattet.

In jüngster Zeit sind Wundauflagen auf den Markt gekommen, die aktiv in den Heilungsprozess eingreifen. Die Produkte sollen nicht nur die Wunde feucht halten, sondern die Abheilungsmechanismen unterstützen. In vitro und in vivo Untersuchungen haben gezeigt, dass eine Reihe von modernen Wundauflagen wie Alginate, Hydrokolloide und Hydrofasern zu einer Reduzierung der biogenen Wundbelastung ohne chemisch aktive Zusätze führen können. Alginate können Bakterien in der Verbandsmatrix binden. Hydrokolloide erzeugen eine Umgebung, die feindlich für ein Mikroben-Wachstum ist und ihre okklusive Barriere-Eigenschaften stellen eine wichtige Infektionsschutzfunktion dar. Hydrofasern immobilisieren Bakterien und tragen damit angeblich zur Verringerung der Wund-Biobelastung bei. Ein relativ neues Konzept stellt die hydrophobe Wechselwirkung dar, wobei die Verbandsfasern mit Dialkylcarbamoylchlorid (DACC) beschichtet sind. Dieses physikalische Konzept stellt einen weiteren Mechanismus einer Bakterienbindung dar.

Zu den antiseptischen Technologien, die weniger gefährlich für gesundes Gewebe sind, aber sehr effektiv für die Abtötung pathogener Keime, zählen silberhaltige Wundbehandlungsprodukte. Der Aufbau und die Zusammensetzung silberhaltiger Wundauflagen können je nach Hersteller und Produkt sehr unterschiedlich sein. Sie sind in Form von Alginaten, Hydrofasern, Hydrokolloiden, Wunddistanzgittern, Schaumverbänden und Polyethylen-Geweben erhältlich. Zur Auswahl stehen auch Aktivkohleauflagen mit Silber. Die antimikrobielle Wirksamkeit von Silber beruht auf dem Silberkation (Ag+), das bei Feuchtigkeit durch einen Oxidationsprozess freigesetzt oder aus Salzen abgegeben wird. Silberkationen können an Bakterienzellen andocken und somit die Struktur und die Funktion der Zelle verändern. Silber kann auf verschiedene Weise in Wundauflagen integriert sein: z. B. (a) Silbermetall oder nanokristallines Silber, (b) anorganische Verbindungen wie Silberoxid, Silberchlorid, Silberphosphat, Silbersulfat, Silber-Kalzium-Natriumphosphat, Silber-Zirkonium-Verbindung und Silbersulfadiazin (SSD) oder (c) organische Komplexe wie Silber-Zinkallantoinat, Silberalginat, Silbercarboxymethylcellulose. Hierbei unterscheiden sich die Silber-Wundauflagen auch hinsichtlich der Menge und der Konstanz der Silberionenabgabe. Zu bekannten silberhaltigen Wundauflagen gehören Produkte wie Acticoat, Biatain Ag, Aquacel Ag, Actisorb Silver, Urgotül silver, Suprasorb A + Ag oder Silvercel. Silbersulfadiazin (SSD) wurde in den 70er Jahren des 20. Jahrhunderts als Antibiotikum für Verbrennungen und Wunden eingeführt.

Eine Übersicht der aus dem Stand der Technik bekannten antimikrobiell wirksamen silberhaltigen Wundversorgungsmaterialien wird in DE-A1-19958458 gegeben. In dieser werden Wundauflagen offenbart, die aus einem synthetischen Polymermaterial bestehen, das metallionenhaltige Zeolithe, vorzugsweise mit Silberionen, enthält.

In DE-A1-10328261 wird die Silberbeschichtung einer Seite eines Polyethylen-Netzes und das Laminieren dieses Netzes auf ein Vlies beschrieben, wobei die Silberschicht zum Vlies gerichtet ist. Dadurch soll der Abrieb von Silberpartikeln in die Wunde unter gleichzeitiger Aufrechterhaltung der antimikrobiellen und desinfizierenden Wirksamkeit der Wundauflage verhindert werden.

Die US-A-5753251 und US-A-5681575 beschreiben antimikrobiell wirkende Beschichtungen mit nanokristallinem Silber, die auf ein Medizinprodukt durch Abscheiden von Metallen, beispielsweise Silber aus der Gasphase, appliziert werden.

In der US-A-2934066 wird eine insbesondere mit Silber beschichtete Wundauflage beschrieben, die eine desinfizierende Wirkung aufweisen soll.

Bis auf DE-A1-10328261 sind alle desinfizierenden silberhaltigen Wundauflagen nach dem Stand der Technik so aufgebaut, dass die mit Silber beschichtete Seite zur Wunde gerichtet ist.

Alle silberhaltigen Wundauflagen wirken durch die mehr oder minder starke Abgabe von Silberionen. Die Beeinflussung mikrobieller Proteine ist auf die hohe Affinität der Silberionen zu funktionellen Gruppen wie Hydroxyl-, Amino-, Carboxyl- und insbesondere Sulphhydrylgruppen der Enzyme in der Zellwand und Strukturproteine zurückzuführen. Silberionen können auch an bakterielle Enzyme binden (Cytochrom a und b) und dadurch Prozesse der Atmungskette blockieren [Guggenbichler et. al. 2008].

Obgleich die bekannten silberhaltigen Produkte mehr oder weniger gut für eine Keimreduzierung in der Wunde sorgen und mit der antimikrobiellen Wirksamkeit einen wichtigen Aspekt einer Wundauflage erfüllen, wird über Beeinträchtigungen bei der Wundheilung durch Silberionen berichtet [Barcikowski et. al. 2012]. Insbesondere wird die Inhibierung der Reepithelisierung durch Silberprodukte hervorgehoben. So kann es bei der Verwendung von Silbersulfadiazin zu einer Beeinträchtigung der Reepithelisierung kommen [Demling et. al. 2001]. Klare Aussagen treffen Burd et. al. (2007) nach vergleichenden Testungen von fünf kommerziell erhältlichen Silberwundauflagen. Sie bewerteten die Zytotoxizität anhand von Einschichtkulturen (Monolayer), Gewebeexplantaten und an einem Wundmodell der Maus. Die Silberverbände Acticoat, Biatain Ag und Aquacel Ag waren hoch zytotoxisch für Keratinozyten und Fibroblasten, während PolyMem Silver und Urgotül SSD weniger zytotoxisch waren. Im Gewebeexplantat, in dem die epidermale Zellproliferation bewertet wurde, hatten alle Silberauflagen zu einer signifikanten Verzögerung der Reepithelisierung geführt. Am Mausmodell kam es nach 7 Tagen durch Acticoat und Biatain Ag zu starker Verzögerung der Wundepithelisation. Diese Ergebnisse wurden von van den Plas et. al. (2008) bestätigt. Beim Vergleich von einer Silberionen freisetzenden Wundauflage mit der silberfreien Kontrolle an Mesh-Graft-Entnahmestellen wurde das Eintreten von > 90 % Reepithelisierung durch Silber abgebende Wundauflagen verzögert. Die Narbenqualität war bei einer Silberionen freisetzenden Wundauflage nach 1-2 Monaten signifikant schlechter und hatte sich erst nach 3 Monaten angeglichen [Innes et. al. 2001]. Die Suche nach antimikrobiellen Wundauflagen mit guter antimikrobieller Aktivität, aber ohne die bei Silber beobachtete Beeinträchtigung der Wundheilung, insbesondere der Reepithelisierung, ist ein aktuelles Thema in der Wundbehandlung.

Silberhaltige Wundauflagen, die in den unterschiedlichsten Darreichungsformen auf dem Markt sind, können daher zwar Infektionen durch in die Wunde eingetragene Keime verhindern, führen aber, wie gezeigt worden ist, zu einer Inhibierung der Reepithelisierung, was eine deutlich verzögerte Wundheilung zur Folge hat.

### Zusammenfassung der Erfindung

Es ist Aufgabe der Erfindung, eine antiseptisch wirksame Wundauflage zu entwickeln, die die Reepithelisierung von akuten Wunden nicht inhibiert, sondern die Wundheilung vielmehr beschleunigt.

Erfindungsgemäß wird die Aufgabe durch eine hybride Wundauflage der eingangs genannten Art gelöst, bei der das antiseptische Mittel zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen und dadurch eine antiseptische Wirkung entfalten. Dieses antiseptische (antimikrobielle und/oder desinfizierende) Mittel ermöglicht eine deutlich verbesserte Behandlung von (offenen bzw. akuten) Wunden, da die Reepithelisierung der Wunde nicht gehemmt und die Wundheilung wirksam unterstützt wird. Im Gegensatz zur Verwendung von rein Silber-haltigen Wundauflagen, wird beim Einsatz der erfindungsgemäßen Wundauflage die Reepithelisierung von akuten Wunden nicht inhibiert, sondern die Wundheilung beschleunigt. Darüber hinaus hat das erfindungsgemäße antiseptische Mittel die vorteilhafte Eigenschaft, die Bildung von Biofilmen in der Wunde zu verhindern oder die Rückbildung bereits entstandener Biofilme ganz oder wenigstens zu bewirken. Da bei chronischen Wunden der Heilungsprozess durch in der Wunde gebildete Biofilme z. T. stark verzögert wird, kann die Wundheilung durch die Anwendung der erfindungsgemäßen Wundauflage auch aus diesem Grunde beschleunigt oder überhaupt erst ermöglicht bzw. in Gang gesetzt werden.

In vorteilhafter Ausgestaltung der Erfindung ist vorgesehen, dass das Trägermaterial derart ausgebildet ist, dass es für Sauerstoff und Feuchtigkeit durchlässig ist. Das Trägermaterial ist einseitig oder vorzugsweise beidseitig, insbesondere allseitig, mit dem antiseptischen Mittel versehen. Dabei kann das Trägermaterial beispielsweise mit dem antiseptischen Mittel beschichtet sein. Das Trägermaterial kann ferner beispielsweise eine Netz-, Loch-, Poren-, Faser- oder Gewebestruktur aufweisen. Zusätzlich kann das Trägermaterial beispielsweise eine an das Trägermaterial angeheftete, Flüssigkeitaufnehmende Schicht umfassen, vorzugsweise textile Flächenware, bevorzugt aus einem Vlies, Gewebe, Gewirk oder Filz. In vorteilhafter Ausgestaltung der Erfindung ist ferner vorgesehen, dass das Trägermaterial aus Polyethylen, Polyester, Polypropylen, Polyurethan und/oder Cellulose (z.B. Baumwolle) besteht.

Das Trägermaterial für das antiseptische Mittel umfasst vorzugsweise eine flüssigkeits- und sauerstoffdurchlässige Abdeckschicht, insbesondere ein Kunststoffnetz, z. B. ein Polyethylen (PE)-Netz, eine perforierte Polymerfolie, einen Vliesstoff, z. B. Polyesterfaservlies, ein Textilgewebe, z. B. ein Baumwollgewebe, oder einen Polyurethanschaum (PU), z. B. einen offenporigen Polyurethanschaum. Die flüssigkeits- und sauerstoffdurchlässige Abdeckschicht kann einseitig oder beidseitig mit dem erfindungsgemäßen antiseptischen Mittel versehen werden, so dass einerseits der direkte Kontakt mit der Wunde, andererseits aber auch die Keimausbreitung in einer das Exsudat aufnehmenden absorbierenden Schicht des Hybridsystems und eine Rückübertragung der mit dem Exsudat aufgenommenen Keime in die Wunde verhindern kann. Die zur Wunde zeigende antimikrobielle Beschichtung kann erfindungsgemäß zusätzlich mit einer Polymerbeschichtung versehen sein, die das Anhaften der Wundauflage an der Wunde vermeidet, nicht aber die antimikrobielle Wirkung unterbinden soll, z. B. durch eine Polyglycerol (PG)-Beschichtung.

Die erfindungsgemäße hybride Wundauflage kann zusätzlich ein absorbierendes Material umfassen, das beispielsweise in enger Verbindung zum Trägermaterial angeheftet sein kann, um das Wundexsudat, einschließlich der in der Wunde befindlichen Keime, aufzunehmen. Dieses absorbierende Material besteht vorzugsweise aus einer textilen Flächenware, bevorzugt aus einem Vlies, Gewebe, Gewirk, Filz etc. Die eingesetzten Materialien entsprechen den in der Regel für Wundauflagen eingesetzten Fasern und Garnen aus Viskose, Polyethylen, Polypropylen, Polyestern etc. Die angestrebten Flächengewichte einer Flüssigkeit aufnehmenden absorbierenden Schicht sind einerseits abhängig von der vorgesehenen Verwendung und andererseits von der Art der Laminierung. Diese absorbierende Schicht kann auch Träger eines Stoffes sein, der ein feuchtes Klima in/über der Wunde aufrecht hält, z. B. ein Hydrogel.

In vorteilhafter Ausgestaltung der Erfindung ist vorgesehen, dass das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist. Alternativ oder zusätzlich kann das antiseptische Mittel aber auch einzelne Partikel umfassen, wobei mindestens ein Partikel die erste und die zweite Metallverbindung umfasst, und/oder wobei mindestens ein Partikel die erste Metallverbindung und mindestens ein anderes Partikel die zweite Metallverbindung umfasst.

Die beiden Metalle (Halbelemente) können also beispielsweise als Schichtsystem auf der Oberfläche des Trägermaterials aufgebracht sein, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Alternativ oder zusätzlich können die beiden Metalle (Halbelemente) aber beispielsweise auch in Form einzelner Partikel auf der Oberfläche des Trägermaterials aufgebracht sein. Dabei kann es sich beispielsweise um Bimetallpartikel, die beide Metalle umfassen, und/oder Metallpartikel, die jeweils nur eines der beiden Metalle umfassen, handeln. Letztere können sequenziell, d.h. erst Partikel des ersten Metalls und dann Partikel des zweiten Metalls (oder umgekehrt), oder gleichzeitig als Gemisch von Partikeln beider Metalle so auf das Trägermaterial aufgebracht werden, dass sie in elektrisch leitendem Kontakt stehen. Die Partikel können einschichtig (nebeneinander liegend) und/oder zumindest teilweise mehrschichtig (übereinander liegend) auf dem Trägermaterial aufgebracht sein.

In weiterer vorteilhafter Ausgestaltung der Erfindung ist ferner vorgesehen, dass das Übergangsmetallelement mindestens ein Metall aus der Gruppe bestehend aus Ruthenium, Iridium, Vanadium, Mangan, Nickel, Eisen, Cobalt, Cer, Molybdän und Wolfram ist.

In weiterer vorteilhafter Ausgestaltung der Erfindung ist auch vorgesehen, dass die erste Metallverbindung mindestens ein Metalloxid, Metalloxyhydrat, Metallhydroxid, Metalloxyhydroxid, Metallhalogenid und/oder mindestens ein Metallsulfid des Übergangsmetallelements umfasst.

In vorteilhafter Ausgestaltung der Erfindung ist ferner vorgesehen, dass der Silberhalbleiter mindestens ein Silberoxid, Silberhydroxyd, Silberhalogenid und/oder Silbersulfid umfasst.

Insgesamt stellt die Erfindung damit ein hybrides, anpassungsfähiges Mehrkomponentensystem aus unterschiedlichen Materialien dar: Übergangsmetalloxid-Halbleiter, vorzugsweise einem Rutheniumoxid-Halbleiter, dem Silber-Halbleiter (z. B. Silberoxid, Silberhalogenid oder Silbersulfid) mit oder ohne zusätzlicher, das Anhaften von Wundbestandteilen an der bioaktiven Beschichtung verhindernden polymeren Deckschicht und einer flüssigkeits- und sauerstoffdurchlässigen Abdeckschicht (Trägermaterial) für das antiseptische Mittel. In einer besonderen Ausführungsform ist ein weiteres, flüssigkeitsaufnehmendes absorbierendes Material, mit/ohne feuchtigkeitsabgebende bzw. -aufrecht haltende Beschichtung an das Trägermaterial angefügt bzw. im Trägermaterial verankert. Durch dieses Hybridsystem steht eine breitbandige antiseptische Wundauflage mit hoher Wirksamkeit gegen Bakterien, Viren, Pilze und sonstige Mikroorganismen (im Folgenden zur Vereinfachung als "antiseptisch" bezeichnet) ohne negative Beeinflussung der Reepithelisierung zur Verfügung.

Die erfindungsgemäße Kombination der mindestens zwei Metallverbindungen ist so auf dem Trägermaterial aufgebracht, dass beide Metallverbindungen miteinander in elektrisch leitendem Kontakt stehen und in Form einer Vielzahl von über die wässrige Phase kurzgeschlossenen nano- bzw. mikrogalvanischen Elementen auf der Trägeroberfläche verteilt sind. Die vorliegende Erfindung umfasst somit in vorteilhafter Weise eine antiseptisch wirksame Metallbeschichtung, die jeweils aus einem halbleitenden, katalytisch aktiven Metalloxid-Halbleiter, vorzugsweise einem Rutheniumoxid-Halbleiter, (Halbelement I eines galvanischen Elementes) und einer halbleitenden, schwer löslichen Silberverbindung (z. B. Silberoxid, Silber-Halogen-Verbindung oder Kombinationen daraus; Halbelement II des galvanischen Elementes) besteht, wobei beide miteinander in direktem, elektrisch leitenden Kontakt stehen. Die hohe katalytische Aktivität des Übergangsmetall-Halbleiter-Elementes (z. B. Rutheniumoxid-Halbelementes) für die Sauerstoffreduktion ist dabei auf den leichten Wechsel der Oxydationsstufen sowie den leichten Sauerstoffaustausch zurückzuführen, der an den aktiven Zentren der Halbleiteroberfläche bevorzugt stattfindet. Dabei wird das Übergangsmetallelement nur in seiner Wertigkeit verändert, wodurch die eigentliche Redox-Reaktion entsteht. Deshalb wird beispielsweise der Rutheniumoxid-Halbleiter nicht verbraucht oder gebildet, sondern nur die Oxidationsstufen verändert. Die Übergangsmetallverbindung bindet den molekularen Sauerstoff, wodurch dieser katalytisch reduziert werden kann.

Deshalb ist das Vorhandensein von mehreren Wertigkeiten Voraussetzung für die katalytische Wirkung und die Redox-Reaktion. Es muss also keine Übergangsmetallverbindung gebildet werden. Spezielle Metalloxide bzw.

Metallsulfide und schwer lösliche Silberverbindungen weisen katalytische Eigenschaften, eine elektrische Leitfähigkeit und eine hohe Stabilität in Wasser auf. Durch geeignete Materialkombination sind zwei Metallhalbleiter, z. B. Rutheniumoxid und Silberoxid bzw. Silberhalogenid und/oder Silbersulfid miteinander im elektrischen Kontakt, die ein unterschiedliches elektrochemisches Potential besitzen und somit eine galvanische Zelle bilden. Wird diese Zelle über die wässrige Phase/Feuchte kurzgeschlossen, entsteht aufgrund der geringen Distanz (µm-Bereich) zwischen den beiden sich kontaktierenden Metallverbindungen eine hohe elektrische Feldstärke. Diese trägt signifikant zur Keimabtötung bei. An beiden Elektroden des mikrogalvanischen Elementes laufen dabei Redox-Reaktionen ab, die jede für sich zu einer Abtötung der Mikroorganismen führen. Am ersten Halbelement (z. B. der Rutheniumoxid-Kathode) wird molekularer Sauerstoff zu Sauerstoffradikalen reduziert, die dann toxisch auf die Mikroorganismen wirken. Am zweiten Halbelement (Silber-Halbleiter-Anode) werden Elektronen von den Mikroorganismen an den Silberhalbleiter abgegeben und diese dadurch oxidativ zerstört. Die beiden Metalle (Halbelemente) können beispielsweise als Schichtsystem auf der Oberfläche des Wundauflagenträgermaterials aufgebracht sein, wobei die Schicht des einen Metalls zumindest teilweise über der des anderen Metalls liegt. Dabei kann die jeweils obere Schicht porös (insbesondere nanoporös) bzw. mikrorissig, insbesondere clusterförmig, auf das andere Metall aufgetragen bzw. auf diesem abgeschieden sein, so dass die wässrige Lösung bzw. die Feuchtigkeit Zugang zu beiden Halbelementen hat und das galvanische Element kurzgeschlossen wird. Die elektrochemische Potentialdifferenz der auf dem Trägermaterial abgeschiedenen Übergangsmetalle des hybriden Systems ist dabei so eingestellt, dass durch Redox-Prozesse der in der feuchten Umgebung befindliche Sauerstoff reduziert und antimikrobiell aktive Sauerstoffradikale gebildet werden können. Das erfindungsgemäße hybride antimikrobielle Schichtsystem, dessen antiseptische Wirksamkeit nicht auf der Abgabe von Bioziden oder Metallionen, sondern auf der katalytisch unterstützten Erzeugung von Sauerstoffradikalen an einer Edelmetallkombination aus beispielsweise von Silber-Ruthenium beruht, verändert seine Zusammensetzung auch bei langzeitiger antimikrobieller Anwendung nicht und benötigt im Gegensatz zu Bioziden oder oligodynamischen Metallen kein Depot oder die Biozid- bzw.

Metallionenabgabe regulierende Vorrichtungen. Anders als bei den Bioziden und oligodynamischen Metallen, die für ihre Wirksamkeit toxische Stoffe an die Wunde abgeben müssen, entsteht bei der Verwendung des erfindungsgemäßen antiseptischen Mittels aus den gebildeten Sauerstoffradikalen am Ende nur Wasser. Da es sich bei der Metallkombination um ein katalytisch unterstütztes System handelt, ist deren antiseptische Wirkung in vorteilhafter Weise ausschließlich von der aktiven Oberfläche und nicht wie bei Bioziden oder den oligodynamischen Systemen (Silber, Kupfer und Zink bzw. deren Salze oder Verbindungen) von deren Menge und Auslaugungsgeschwindigkeit abhängig.

In weiterer vorteilhafter Ausgestaltung der Erfindung ist vorgesehen, dass das antiseptische Mittel mit einer Protein abweisenden Beschichtung, insbesondere in Richtung Wunde, versehen ist, die einerseits das Anhaften von Wundbestandteilen an der Wundauflage verhindert, aber die antimikrobielle Wirkung der erfindungsgemäßen Beschichtung nicht blockiert.

In vorteilhafter Ausgestaltung der Erfindung ist ferner vorgesehen, dass die Stärke der antiseptischen Wirkung durch ein Einstellen der Dicke mindestens einer der beiden Metallschichten, der Menge mindestens eines der beiden Metalle und/oder einer der beiden Metallverbindungen, und/oder der Flächenanteile der beiden Metalle auf der Trägermaterialoberfläche gezielt einstellbar ist. Das erfindungsgemäße hybride System kann gezielt hinsichtlich der Stärke seiner antimikrobiellen Wirkung (häufig wird nicht die höchste Wirkung gewünscht, Einstellung per Wachstumskurven) eingestellt werden. Beispielsweise kann durch die Variation des Beschichtungsverfahrens die Dicke der Metallschicht(en) eingestellt werden. Durch die Form des Trägermaterials der Beschichtung kann beispielsweise die katalytisch wirksame antiseptische Schichtoberfläche beeinflusst werden, wie z. B. mit Vliesmaterialien, offenporigen Schäumen oder Geweben, die sehr unterschiedlich große Oberflächen besitzen.

Die oben beschriebene erfindungsgemäße bioaktive Zusammensetzung ist vorzugsweise frei von Ascorbinsäure.

Die Aufgabe wird ferner durch ein Verfahren der eingangs genannten Art zur Herstellung einer hybriden Wundauflage mit antiseptischer Wirkung, insbesondere zur Herstellung der oben beschriebenen erfindungsgemäßen hybriden Wundauflage, gelöst, welches die folgenden Schritte umfasst:
a) Bereitstellen eines, vorzugsweise als Flächenware ausgelegten, Trägermaterials,
b) zumindest teilweises Aufbringen einer ersten Metallschicht auf das Trägermaterial, und
c) zumindest teilweises Aufbringen einer zweiten Metallschicht auf die in Schritt b) aufgebrachte erste Metallschicht, wobei die zweite Metallschicht clusterförmig, nanoporös und/oder mikrorissig auf die erste Metallschicht aufgebracht wird.

In vorteilhafter Ausgestaltung des erfindungsgemäßen Verfahrens ist vorgesehen, dass auf mindestens einer Metallschicht eine Verbindungsschicht erzeugt wird, die mindestens eine Metallverbindung des entsprechenden Metalls umfasst, welche aus der Gruppe bestehend aus Oxiden, Halogeniden und Sulfiden ausgewählt ist.

In weiterer vorteilhafter Ausgestaltung des erfindungsgemäßen Verfahrens ist vorgesehen, dass die Stärke der antiseptischen Wirkung durch ein Einstellen der Dicke mindestens einer der beiden Metallschichten, der Menge mindestens eines der beiden Metalle, und/oder der Flächenanteile der beiden Metalle auf der Trägermaterialoberfläche gezielt eingestellt wird.

Beispielsweise kann die Schicht aus dem ersten Metall mit einer mittleren Schichtdicke von 500 nm, vorzugsweise 100 - 200 nm, vorzugsweise 50 - 100 nm, aufgebracht werden. Alternativ oder zusätzlich kann die Schicht aus dem zweiten Metall beispielsweise mit einer mittleren Schichtdicke von höchstens 100 nm, vorzugsweise höchstens 50 nm, bevorzugt 2-20 nm, aufgebracht werden.

In vorteilhafter Ausgestaltung des erfindungsgemäßen Verfahrens ist ferner vorgesehen, dass das jeweilige Metall sequenziell oder gleichzeitig mittels Abscheidung aus der Gasphase (PVD) oder chemisch-reduktiver Abscheidungs-Verfahren auf das Trägermaterial aufgebracht wird. Beispielsweise kann eine Silber- und Ruthenium-Abscheidung aus der Gasphase (PVD) erfolgen, wobei Silber und Ruthenium (a) sequentiell über die Verwendung zweier unabhängiger Metalltargets oder (b) gleichzeitig von einem entsprechend der gewünschten Silber-Ruthenium-Legierungstarget-Zusammensetzung abgetragen und auf das Trägermaterial aufgetragen werden.

Nach Schritt c) des erfindungsgemäßen Verfahrens können die Metallschichten mit organischen Polymeren, vorzugsweise Polyglycerol (PG) oder Polyethylenglycol (PEG), modifiziert werden. Durch solche Modifikationen kann das antiseptische Mittel mit zusätzlichen vorteilhaften Eigenschaften versehen und/oder in seiner Wirksamkeit weiter verbessert werden.

In vorteilhafter Ausgestaltung des erfindungsgemäßen Verfahrens ist ferner vorgesehen, dass das erste Metall Silber und das zweite Metall ein Metall aus der Gruppe bestehend aus Ruthenium, Iridium, Vanadium, Mangan, Nickel, Eisen, Cobalt, Cer, Molybdän und Wolfram ist, oder dass das erste Metall ein Metall aus der Gruppe bestehend aus Ruthenium, Iridium, Vanadium, Mangan, Nickel, Eisen, Cobalt, Cer, Molybdän und Wolfram und das zweite Metall Silber ist.

In weiterer vorteilhafter Ausgestaltung des erfindungsgemäßen Verfahrens ist vorgesehen, dass das Aufbringen der Metallschichten mittels chemisch-reduktiver Beschichtungsverfahren erfolgt, vorzugsweise nach dem Spray-Coating-Verfahren, welches die folgenden Schritte umfasst: a) Spray-Coating-Beschichtung von Silber und Verwendung einer Silbernitratlösung und Verwendung eines Reduktionsmittels und b) nachfolgend Abscheidung von Ruthenium nach dem Spray-Coating-Verfahren, vorzugsweise durch Einsatz einer Ruthenium(III)-chlorid-Lösung und eines Reduktionsmittels. Dabei können das Reduktionsmittel für Silber vorzugsweise Ascorbinsäure und das Reduktionsmittel für die Rutheniumabscheidung Natriumborhydrid, Hydrazin und/oder ein Hydraziniumsalz, und/oder Hydroxylamin und/oder ein Hydroxylammoniumsalz sein.

Die oben beschriebenen Beschichtungsprozesse werden vorzugsweise in einem Rolle-zu-Rolle-Verfahren durchgeführt.

Die Erfindung umfasst ferner eine hybride Wundauflage mit antiseptischer Wirkung, die in dem oben beschriebenen erfindungsgemäßem Verfahren hergestellt wurde.

Als Wundauflagenträgermaterial kommen prinzipiell alle eingangs erwähnten Materialien in Frage, vorzugsweise als Flächenware. Vorzugsweise wird als erste Metallschicht ein erstes Metall auf das Trägermaterial aufgebracht, welches mindestens einen elektrisch leitfähigen Silberhalbleiter umfasst. Als zweite Metallschicht wird ein zweites Metall auf die erste Metallschicht aufgebracht, welches den Übergangsmetalloxid-Halbleiter, z. B. einen Rutheniumoxid-Halbleiter, umfasst, der über mehrere Oxidationsstufen verfügt und über katalytisch aktive Zentren einen Wechsel der Oxidationsstufen erlaubt. Alternativ kann als erste Metallschicht ein erstes Metall auf das Trägermaterial aufgebracht werden, welches mindestens ein Übergangsmetallelement umfasst, das über mehrere Oxidationsstufen verfügt und über katalytisch aktive Zentren einen Wechsel der Oxidationsstufen erlaubt. Als zweite Metallschicht wird in diesem Fall ein zweites Metall auf die erste Metallschicht aufgebracht, welches mindestens einen elektrisch leitfähigen Silberhalbleiter umfasst. Bei beiden Alternativen wird die zweite Metallschicht derart durchlässig auf die erste Metallschicht aufgebracht, dass die beiden Metallschichten zumindest mit ihren jeweiligen Oberflächen miteinander in elektrisch leitendem Kontakt stehen und dadurch eine antimikrobielle bzw. antiseptische Wirkung entfalten können (siehe oben).

Zur Herstellung eines erfindungsgemäßen bioaktiven Hybridmaterials kann beispielsweise als erste Schicht Silber mittels Abscheidung aus der Gasphase durch Aufdampfen oder Sputtern und nachfolgend Ruthenium durch Sputtern auf das Trägermaterial abgeschieden werden (PVD-Verfahren). Entsprechend des erfindungsgemäßen Verfahrens ist vorgesehen, dass das jeweilige Metall sequenziell aus einem Silber- und einem Ruthenium-Target oder gleichzeitig mit Hilfe eines Silber-Ruthenium-Legierungstargets abgetragen und auf das Trägermaterial aufgebracht wird. Als Precursor zur Erzielung eines guten Haftgrunds für die beiden bioaktiven Silber- und Ruthenium-Schichten, wird auf das Trägermaterial eine Bekeimung aus Titan, Gold, Al oder Chrom, vorzugsweise aus Titan aus der Gasphase abgeschieden. Bei geeigneter Plasmaaktivierung kann ggf. auf eine haftvermittelnde Precursor-Beschichtung verzichtet werden.

In weiterer vorteilhafter Ausgestaltung der Erfindung werden die Silber- und die Ruthenium-Schicht auf dem Trägermaterial durch ein Spray-Coating Verfahren abgeschieden, wobei die beiden Metalle sequentiell durch die Wahl eines geeigneten Reduktors aus dem auf die Oberfläche gesprühten Elektrolyten zu einer fest auf der Trägeroberfläche haftenden Metallschicht reduziert werden. Als Silbersalz wird vorzugsweise Silbernitrat, als Rutheniumsalz vorzugsweise Ruthenium(III)chlorid verwendet. Als Reduktionsmittel können verschiedene Reduktionsmittel eingesetzt werden, beispielsweise Aldehyde, Ascorbinsäure, Metallhydride (vorzugsweise Natriumborhydrid), Hydrazin und/oder ein Hydraziniumsalz, und/oder Hydroxylamin und/oder ein Hydroxylammoniumsalz.

In vorteilhafter Ausgestaltung des erfindungsgemäßen Verfahrens ist ferner vorgesehen, dass die Stärke der antiseptischen Wirkung durch ein Einstellen der Dicke mindestens einer der beiden Metallschichten, der Menge mindestens eines der beiden Metalle und/oder einer der beiden Metallverbindungen, und/oder der Flächenanteile der beiden Metalle auf der Oberfläche des Trägermaterials gezielt eingestellt wird. Beispielsweise kann die Stärke der antimikrobiellen bzw. antiseptischen Wirkung der erfindungsgemäßen hybriden Wundauflage durch entsprechende Wahl der Abscheidungsbedingungen für die beiden Metalle auf der Oberfläche des Trägermaterials gesteuert werden, wobei die Flächenanteile der beiden Metalle auf der Hybridoberfläche gegeneinander verändert werden. Die für die gewünschte antiseptische Wirkung des erfindungsgemäßen Hybridmaterials gesuchte Oberflächenzusammensetzung lässt sich anhand geeigneter mikrobiologischer Methoden, wie beispielsweise durch Wachstumskurven, anhand der Variation der Schichtzusammensetzung und des Schichtaufbaus ermitteln. Erfindungsgemäß liegen die Silberschichten insbesondere bei 500 nm, vorzugsweise 100-200 nm, vorzugsweise bei 50 - 100 nm und Ruthenium höchstens 100 nm, insbesondere bei 50 nm, vorzugsweise bei 20 nm, insbesondere zwischen 2 und 10 nm.

Die Erfindung umfasst ferner ein antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Verwendung bei der Behandlung von Wunden der menschlichen oder tierischen Haut.

Des Weiteren umfasst die Erfindung ein antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Anwendung in einem Verfahren zur topischen Behandlung von Wunden der menschlichen oder tierischen Haut durch Abdecken der Haut mittels einer Wundauflage.

Die Erfindung umfasst auch ein antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Anwendung in einem Verfahren zur topischen Behandlung von Wunden der menschlichen oder tierischen Haut durch Abdecken der Haut mittels einer Wundauflage, wobei das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist.

"Antiseptisches Mittel" im Sinne der Erfindung ist ein Stoff, eine Verbindung und/oder eine Kombination derselben, der bzw. die verwendet wird bzw. werden, um die Infektion einer Wunde zu verhindern oder zu heilen, wobei das antiseptische Mittel eine antimikrobielle, d. h. bakterizide, bakteriostatische, fungizide, fungistatische, desinfizierende und/oder antivirale, Wirkung entfaltet.

"Halbelement" im Sinne der Erfindung bezeichnet einen Teil eines galvanischen Elements, der dieses in Verbindung mit mindestens einem weiteren Halbelement bildet. Ein Halbelement umfasst dabei eine Metallelektrode, die sich zumindest teilweise in einem Elektrolyten befindet.

"Galvanisches Element" im Sinne der Erfindung bezeichnet die Kombination von zwei unterschiedlichen Metallen, die in einem gemeinsamen Elektrolyten jeweils eine Elektrode (Anode bzw. Kathode) bilden. Stehen die beiden Metallelektroden miteinander in direktem Kontakt oder sind sie über einen Elektronenleiter elektrisch leitend miteinander verbunden, gibt das unedlere Metall mit dem niedrigeren Redoxpotential (Elektronendonator, Anode) Elektronen an das edlere Metall mit dem höheren Redoxpotential (Elektronenakzeptor, Kathode) ab und setzt in Folge die Redoxprozesse an den Elektroden in Gang.

"Elektrolyt" im Sinne der Erfindung bezeichnet einen Stoff (z. B. Ionen in wässriger Lösung), der unter dem Einfluss eines elektrischen Feldes durch die gerichtete Bewegung von Ionen elektrischen Strom leitet.

"Metall" im Sinne der Erfindung bezeichnet Atome eines chemischen Elements des Periodensystems der Elemente (alle Elemente, die keine Nichtmetalle sind), die mittels metallischer Bindungen ein Metallgitter und dadurch ein makroskopisch homogenes Material bilden, das sich u.a. durch eine hohe elektrische Leitfähigkeit und eine hohe Wärmeleitfähigkeit auszeichnet. Der Begriff "Metall" umfasst auch Legierungen, die mindestens zwei unterschiedliche Metalle umfassen, Metallverbindungen wie z.B. Metalloxide, Metalloxyhydrate, Metallhydroxide, Metalloxyhydroxide, Metallhalogenide und Metallsulfide, sowie Kombinationen von Metallen und entsprechenden Metallverbindungen.

"Partikel", "partikelförmig" oder "partikulär" im Sinne der Erfindung bezeichnet einzelne teilchenförmige Körper, die als Ganzes gegenüber anderen Partikeln und ihrer Umgebung abgegrenzt sind. Dabei sind im Rahmen der Erfindung alle möglichen Partikelformen und -größen, unabhängig von Geometrie und Masse, eingeschlossen.

"Schicht" oder "schichtförmig" im Sinne der Erfindung bezeichnet eine zwei- oder dreidimensionale Struktur, die eine horizontale Ausdehnung hat und zumindest durch zwei Flächen, die Schichtunterseite und die Schichtoberseite, begrenzt ist. Dabei kann eine Schicht aus einem zusammenhängenden Material bzw. Stoff und/oder sich zumindest teilweise berührenden Partikeln bestehen. Eine Schicht kann im Sinne der Erfindung homogen, heterogen, durchgehend (d.h. ununterbrochen), clusterförmig, nanoporös und/oder mikrorissig ausgebildet sein. "Beschichtet" im Sinne der Erfindung ist ein Material, Partikel oder sonstiger Körper, wenn zumindest ein Teil seiner (äußeren oder inneren) Oberfläche mit einer "Schicht" (siehe oben) versehen ist.

"Topische Behandlung" im Sinne der Erfindung bezeichnet die Anwendung von Wirkmechanismen dort, wo sie therapeutisch wirken sollen, im Gegensatz zur sogenannten systemischen Behandlung, d. h. der Gabe von Arzneimitteln beispielsweise als Infusion oder Tablette. Die topische Behandlung stellt also eine lokale Therapieform dar, die insbesondere in der Dermatologie, der Augenheilkunde, der Hals-Nasen-Ohrenheilkunde und der Frauenheilkunde angewendet wird, d. h. in Bereichen des Körpers, die von außen zugänglich sind, wie beispielsweise Haut, Hornhaut (des Auges) oder Schleimhäute. Topische Behandlungsformen haben den Vorteil, dass die Wirkstoffe oder Wirkmechanismen nur dort wirken, wo sie benötigt werden, während die gesunde Haut bzw. Schleimhaut geschont wird. Durch die lokale Anwendung können darüber hinaus viele systemische Nebenwirkungen vermieden werden.

Der Begriff "Haut" im Sinne der Erfindung umfasst das äußere Organ eines menschlichen oder tierischen Körpers, das u. a. der Abgrenzung des Körperinneren nach außen dient (Deckgewebe). Der Begriff "Haut" umfasst dabei alle Schichten des Organs, insbesondere Epidermis (Oberhaut), Dermis (Lederhaut) und Subcutis (Unterhaut). Im Sinne der Erfindung umfasst der Begriff "Haut" insbesondere auch Schleimhäute und die Oberflächen der Lippen und Schamlippen sowie des Außen- und Mittelohrs.

Der Begriff "Wunde" oder "Wund..." im Sinne der Erfindung umfasst eine Verletzung bzw. einen Defekt der Haut (siehe oben) mit oder ohne Gewebsverlust, die bzw. der durch äußere Gewalt oder als Folge einer Krankheit verursacht wurde.

Die Erfindung wird im Weiteren anhand der folgenden Abbildungen und Beispiele exemplarisch näher erläutert.

### Kurze Beschreibung der Abbildungen

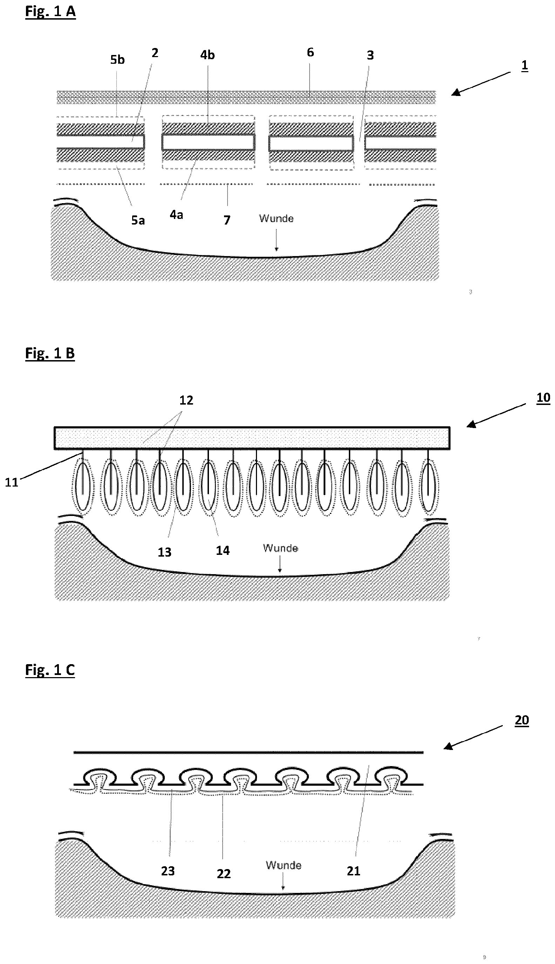

**Figur 1** zeigt schematische Abbildungen von drei beispielhaften Ausführungsformen der erfindungsgemäßen antiseptischen hybriden Wundauflage:
   (a) Beidseitig mit Silber und Ruthenium beschichtetes perforiertes Trägermaterial mit saugfähigem Vliesmaterial auf der der Wundseite abgelegenen Seite;
   (b) Faservlies-Material mit Silber und Ruthenium beschichteten Faserspitzen; und
   (c) Saugfähiges offenporiges Schaummaterial mit Silber und Ruthenium-Beschichtung.
**Figur 2** zeigt beispielhaft fotographische Abbildungen verschiedener Ausführungsformen antiseptisch beschichteter Trägermaterialien, die aus der Gasphase (PVD) mit 350 nm Silber und 60 nm Ruthenium beschichtet worden sind:
   (a) Beschichtetes Polyethylennetz;
   (b) Beschichtetes Baumwollgewebe;
   (c) Beschichtetes Polyestervlies; und
   (d) Beschichteter offenporiger Polyurethanschaum.
**Figur 3** zeigt graphische Darstellungen des Verlaufs der Bildung von Sauerstoffradikalen (ROS) an Silber-Ruthenium-beschichteten Proben in Abhängigkeit von der Ruthenium-Schichtdicke (Silberschichtdicke 350 nm):
   (a) Bildung von Wasserstoffperoxid (H202) und
   (b) Bildung von Hydroxyradikalen (OH*).
**Figur 4** zeigt Diagramme eines zeitlich aufgelösten Plaque-Reduktionsassays einer Silber-Ruthenium-PVD - Beschichtung auf einer PE-Folie gegen Feline Coronavirus (FCoV), TCPS ist die Kontrolle bei der das Virus direkt auf der "well-plate" inkubiert wurde (Antivirale Wirkung einer hybriden Silber (100 nm)-Ruthenium (50 nm)-PVD Beschichtung auf Polypropylen (PP)-Plättchen).
**Figur 5** zeigt eine fotographische Abbildung einer Agar-Platte zur Demonstration der antimikrobiellen Wirkung einer Silber (350 nm)-Ruthenium (60 nm)-PVD-Beschichtung mit verschieden dicken Polyglycerol-Beschichtungen im Agar-Test mit einer Suspensionskultur (10⁷/ ml mit 200 µl ausplattiert) mit Bakterien von E. *coli* (DSM 498):
   P3: Silber-Ruthenium: PG P1 a
   P4: Silber-Ruthenium: PG P1 b
   P5: Silber-Ruthenium: PG P2 a
   P6: Silber-Ruthenium: PG P2 b
   P7: Silber-Ruthenium: PG P3 a
   P8: Silber-Ruthenium: PG P3 b
   P9: Silber-Ruthenium ohne PG
**Figur 6** zeigt Balkendiagramme zum Biofilmabbau von modellhaft durch
   (a) *Pseudomonas aeruginosa* (ATCC 9027),
   (b) *Staphylococcus aureus* (ATCC 6538) und
   (c) *Candida albicans* (ATCC 10231)
   erzeugte Biofilme durch eine hybride Silber (350 nm)- und Ruthenium (60 nm)-PVD-Beschichtung auf einem Polyesterfaservlies (Debri), Baumwollgewebe (BW) und einem offenporigem Polyurethanschaum (PU).

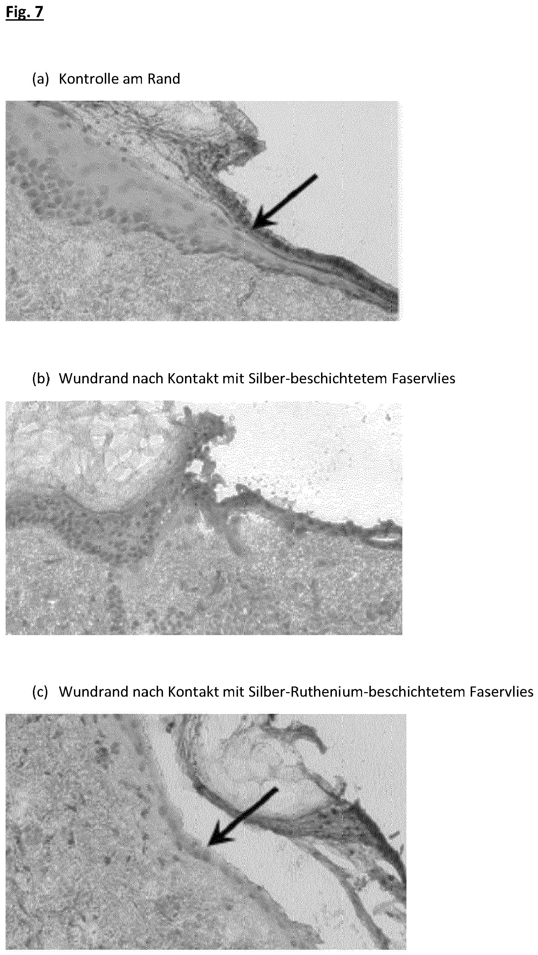

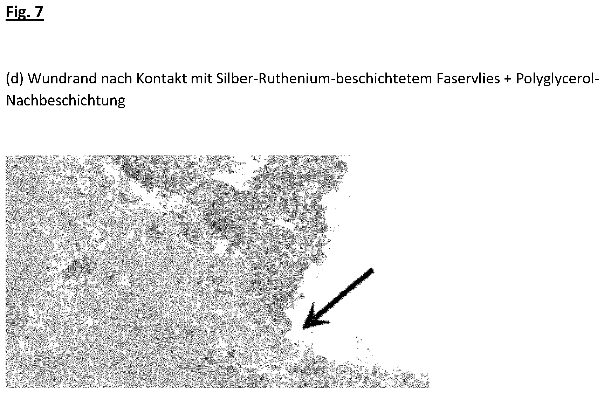

**Figur 7** zeigt fotographische Abbildungen von histologischen Schnitten (Hämatoxylin und Eosin-gefärbt) von mit verschiedenen antiseptischen Mitteln behandelten Wunden aus dem Bereich der Wundränder:
   (a) Kontrolle;
   (b) mit Silber (350 nm) beschichtetes Polyesterfaservlies;
   (c) mit Silber (350 nm) und Ruthenium (60 nm) beschichtetem Polyesterfaservlies; und
   (d) mit Silber (350 nm) und Ruthenium (60 nm) beschichtetem Polyesterfaservlies und einer Polyglycerol (PG)-Nachbeschichtung (verdünnte PG-Lösung (10 mg/mL) und ca. 10 Sek Sprühzeit auf die Silber-Ruthenium-Fasern; PG-Schichtdicke ca. 200 nm).

### Beispielhafte und bevorzugte Ausführungsformen der Erfindung

Die erfindungsgemäße hybride Wundauflage kann beispielsweise auf der Basis eines Trägermaterials hergestellt werden, wobei zunächst eine erste geschlossene Schicht mit einem der beiden erfindungsgemäßen Elektrodenmetalle auf einem flüssigkeits- und sauerstoffdurchlässigen Trägermaterial, vorzugsweise einem Kunststoffnetz, z. B. ein Polyethylen (PE)-Netz, einer perforierten Polymerfolie, einem Vliesstoff, z. B. Polyesterfaservlies oder einem Textilgewebe, z. B. einem Baumwollgewebe, einem Polyurethanschaum (PU), z. B. einem offenporigen Polyurethanschaum, aufgetragen wird. Im Anschluss daran wird das zweite Elektrodenmetall als nicht geschlossene, clusterförmige, poröse oder mikrorissige dünne zweite Schicht auf der ersten Elektrodenschicht aufgetragen. Beispielsweise kann eine SilberBeschichtung vorzugsweise mittels Abscheidung aus der Gasphase durch Aufdampfen oder Sputtern und eine Ruthenium-Schicht durch Sputtern auf das Trägermaterial abgeschieden werden (PVD-Verfahren). Entsprechend des erfindungsgemäßen Verfahrens ist vorzugsweise vorgesehen, dass das jeweilige Metall sequenziell von einem Silber- und einem Ruthenium-Target oder gleichzeitig mit Hilfe eines Silber-Ruthenium-Legierungstargets abgetragen und auf das Trägermaterial aufgebracht wird. Als Precursor zur Erzielung eines guten Haftgrunds für die beiden bioaktiven Silber- und Ruthenium-Schichten, kann zuvor auf das Trägermaterial eine Bekeimung aus Titan, Gold, Al oder Chrom, vorzugsweise aus Titan, aus der Gasphase abgeschieden werden.

Alternativ können insbesondere für nicht saugfähige Trägermaterialien, beispielsweise ein perforiertes Polyethylen (PE)-Netz, die Silber- sowie die Ruthenium-Schicht chemisch-reduktiv über ein Spray-Coating Verfahren sequentiell auf das Trägermaterial aufgetragen werden.

Geeignete Reduktionsmittel sind beispielsweise Aldehyde, Ascorbinsäure, Hydrazin, Hydroxylamin oder Metallhydride und Borane bzw. Natriumborhydrid.

Die optionale Nachbeschichtung des antiseptischen Mittels mit einer polymeren Schicht, die das Anhaften von Wundbestandteilen an der Wundauflage vermeiden soll, kann außerhalb der PVD-Anlage oder in-line bei der Spray-Coating-Anlage erfolgen. Beispielhaft kann als polymere Beschichtung Polyglycerol (PG) oder Polyethylenglycol (PEG) auf die antimikrobielle Silber-Ruthenium-Schicht aufgesprüht werden.

**Figur 1** zeigt schematisch verschiedene Ausführungsformen des erfindungsgemäßen antiseptischen hybriden Wundauflagenaufbaus, dessen Form und Größe maßgeblich von der Geometrie und Struktur des Trägermaterials bestimmt wird. Im Folgenden sind beispielhaft, aber nicht darauf begrenzt, drei verschiedenartige Ausführungsformen dargestellt.

**Figur 1** **A** zeigt ein vorteilhaftes Ausführungsbeispiel einer erfindungsgemäßen Wundauflage **(1).** In diesem Beispiel ist auf einem Trägermaterial **(2),** bei dem es sich hier um eine perforierte Folie handelt, die anwendungsgemäß unterschiedliche Porenweiten und Porenstrukturen **(3)** aufweist, eine erste, weitgehend geschlossene Metallschicht **(4 a** bei einseitiger bzw. **4 a** und **4 b** bei beidseitiger Beschichtung), vorzugsweise eine Silberschicht, aufgetragen. Über der ersten Schicht des hybriden Systems ist das zweite Metall, vorzugsweise Ruthenium, als sehr dünne, nanoporöse Schicht **(5 a** bei einseitiger bzw. **5 a** und **5 b)** bei beidseitiger Beschichtung) aufgetragen. Erste **(4 a** bzw. **4 a** und **4 b)** und zweite Schicht **(5 a** bzw. **5 a** und **5 b)** über dem Trägermaterial **(3)** sind so aufgebaut, dass Sauerstoff aus der feuchten Umgebung an dem kathodischen Teil des aufgebrachten antiseptischen Mittels der Hybridoberfläche reduziert wird und Sauerstoffradikale gebildet werden, die an die Wunde (und an ein saugfähiges Vliesmaterial **(6),** siehe unten) gelangen und dort ihre antiseptische bzw. antimikrobielle Wirkung entfalten können. Die metallischen Komponenten der ersten geschlossenen Schicht **(4 a** bzw. **4 a** und **4 b)** und zweiten porösen Schicht **(5 a** bzw. **5 a** und **5 b)** können durch chemische Reaktionen an der Oberfläche jeweils in eine Metallverbindung, z.B. ein Metallhalogenid oder Metallsulfid, umgewandelt werden bzw. durch eine oxidierende Lösung bzw. durch den in der Luft befindlichen Sauerstoff eine Oxidschicht ausbilden bzw. eine bestehende Oxidschicht in eine Mischoxidschicht mit veränderten Wertigkeiten umwandeln. Das hybride Schichtsystem auf dem Trägermaterial **(2)** kann mit einer chemisorbierten polymeren Schicht, beispielsweise einer Polyglycerol-Schicht (PG) **(7),** versehen werden, deren Aufgabe es ist, das Anhaften von Wundbestandteilen zu verhindern, wodurch die antimikrobielle Wirkung der Silber-Ruthenium-Schicht nicht inhibiert wird. Die PG-Schicht **(7)** wird vorzugsweise nur einseitig in Wundrichtung **(4 a** und **5 a)** auf das Silber-Ruthenium-Schichtsystem, z. B. durch Spray-Coating, aufgetragen. Je nach dem benötigten Eigenschaftsprofil, können die PVD- oder durch chemisch-reduktives Spray-Coating abgeschiedenen Metalle und chemisch aufgebrachten Verbindungschichten in ihrer lateralen Verteilung, Dicke und Struktur variabel eingestellt werden. In verschiedenen Ausführungsformen wird die Wundauflage zusätzlich mit einer das Wundexsudat aufnehmenden, saugfähigen Faservliesauflage **(6)** versehen, die auf der der Wunde abgelegenen Seite platziert wird und das Wundexsudat durch das perforierte Trägermaterial **(2)** aufsaugen soll. Um das Wachstum und die Rückübertragung von mit dem Wundexsudat aufgenommenen Keimen in die Wunde zu verhindern, kann das perforierte Trägermaterial **(2)** auf beiden Seiten mit dem antiseptischen Mittel ausgerüstet werden **(4 a** und **5 a)** sowie **(4 b** und **5 b).** Da Feuchte die Wundheilung begünstigt, wird in vielen Fällen das saugfähige Faservlies noch mit einem Feuchtigkeitsträger versehen, beispielsweise einer Hydrogel-Beschichtung.

In einer weiteren Ausführungsform der erfindungsgemäßen antimikrobiellen Wundauflage **(10),** die in **Figur 1** **B** dargestellt ist, wird das erfindungsgemäße antiseptische Mittel auf den Fasern **(11)** eines Faservlies-Trägermaterials **(12),** z. B. ein Polyesterfaservlies, abgeschieden. Dabei werden die Fasern **(11)** nur teilweise mit einer ersten Metallschicht **(13)** und einer zweiten Metallschicht **(14)** beschichtet, so dass die unbeschichteten Teile der Fasern **(11)** selbst noch genügend Saugkraft für die Aufnahme des Wundexsudats besitzen. Da das Faservlies-Trägermaterial **(12)** eine hohe Saugfähigkeit besitzt, kommt für die Metall - Beschichtung **(13, 14)** in diesem Fall nur eine trockene Beschichtungstechnik aus der Gasphase (PVD) in Betracht.

In einer weiteren Ausführungsform der erfindungsgemäßen antimikrobiellen Wundauflage **(20),** die in **Figur 1** **C** dargestellt ist, wird hier ein offenporiger, saugfähiger Schaum als Trägermaterial **(21),** z. B. aus Polyurethan (PU), mit dem erfindungsgemäßen antiseptischen Mittel, d. h. einem ersten Metall (22) und einem zweiten Metall (23) beschichtet. Wie bei dem Faservliesträgermaterial (12) gemäß Figur 1B wird der offenporige Schaum **(21)** vorzugsweise mit einem trockenen Beschichtungsverfahren aus der Gasphase (PVD) mit dem ersten **(22)** und dem zweiten **(23)** Metall beschichtet.

In allen Ausführungsformen kann als Antihaftschicht ein geeignetes Polymer, das die Anhaftung von Wundbestandteilen verhindert, aber die antimikrobielle Wirkung des erfindungsgemäßen antiseptischen Mittels nicht negativ beeinflusst, z. B. mit dem Protein abweisenden Polyglycerol (PG) oder Polyethylenglycol (PEG), nachbeschichtet werden. In vorteilhafter Weise führt die polymere Nachbeschichtung mit beispielsweise PG oder PEG dazu, dass beispielsweise eine hydrophobe Metall-Beschichtung, z. B. mit Silber und Ruthenium, hydrophile Eigenschaften erhält. Das ist insbesondere vorteilhaft bei den saugfähigen Trägermaterialien, wie z. B. dem Polyesterfaservlies. Mit der polymeren Nachbeschichtung von erfindungsgemäßen antimikrobiellen Metall-Beschichtung können daher nicht nur Protein abweisende, sondern zusätzlich auch noch hydrophile Eigenschaften erzeugt werden.

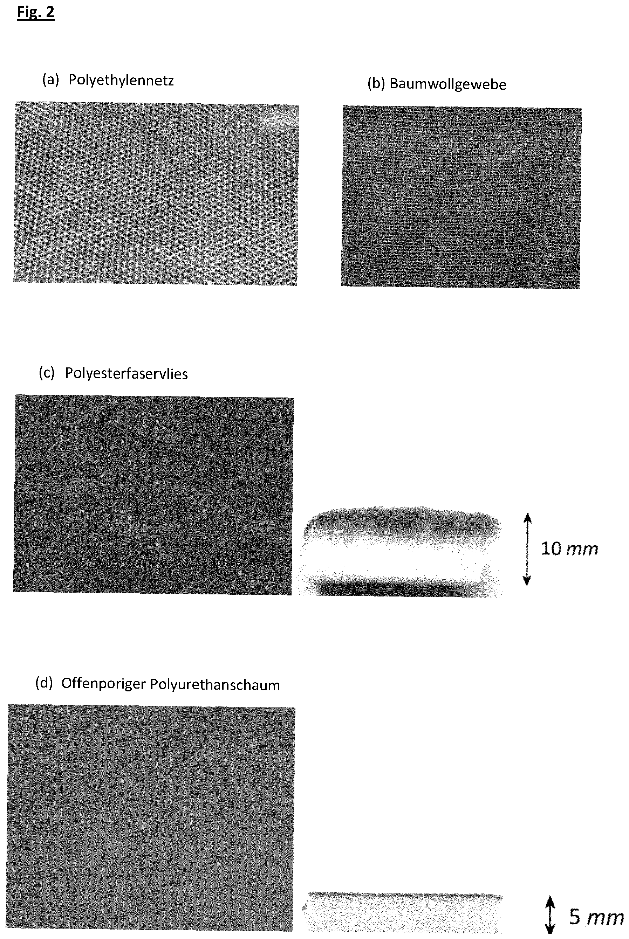

**Figur 2** zeigt unterschiedliche Ausführungsformen der erfindungsgemäßen Wundauflage auf unterschiedlichen Trägermaterialien, die mit ca. 350 nm Silber und ca. 60 nm Ruthenium aus der Gasphase (PVD-Verfahren) beschichtet worden sind. In **Figur 2** **a** ist ein einseitig mit Silber und Ruthenium beschichtetes Polyethylen-Netz zu sehen ist, bei dem sequentiell Silber und Ruthenium aus der Gasphase im Sputter-Verfahren abgeschieden worden sind. In **Figur 2 b** ist ein allseitig mit Silber und Ruthenium aus der Gasphase beschichtetes Baumwollgewebe dargestellt. **Figur 2 c** zeigt ein Polyesterfaservlies, das aus der Gasphase mit Silber und Ruthenium beschichtet worden ist. Im Querschnitt (rechts) durch das beschichtete Polyesterfaservliesmaterial ist gut zu erkennen, dass das erste Drittel der zur Wunde gerichteten Polyesterfasern mit Silber und Ruthenium bei der Beschichtung aus der Gasphase mit den beiden Metallen belegt worden sind. Damit können die Fasern noch das Wundexsudat aufsaugen. Gleichzeitig verhindert die antiseptische Faserbeschichtung die Ausbreitung der mit dem Wundexsudat aufgesaugten Mikroorganismen. **Figur 2 d** zeigt einen mit Silber und Ruthenium aus der Gasphase beschichteten offenporigen Polyurethanschaum. Im Vergleich zum Polyesterfaservlies wird, entsprechend geringer Porentiefe, eine deutlich kleinere Oberfläche mit der antiseptischen Schicht ausgekleidet, wie im Querschnitt (rechts) zu erkennen ist.

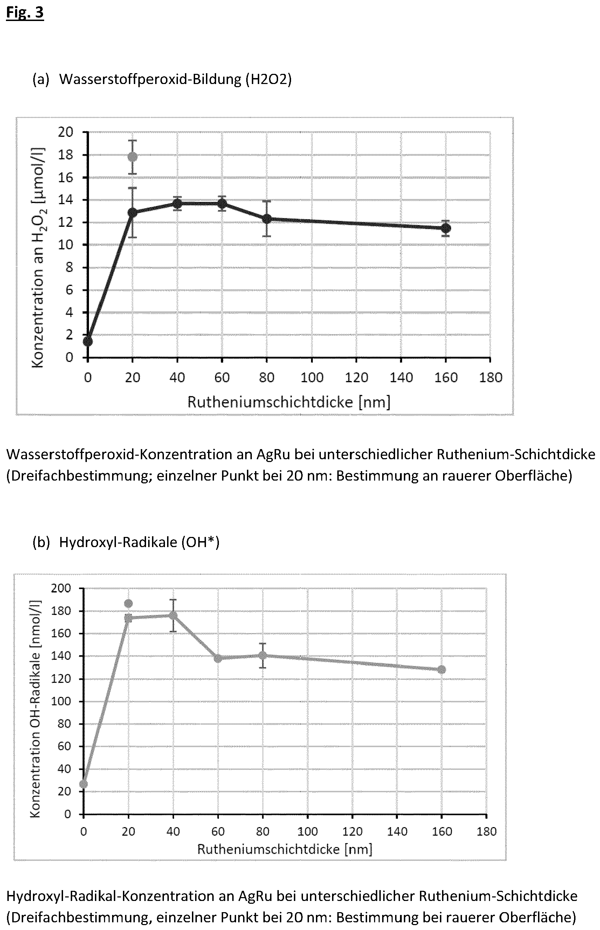

In **Figur 3** **a** ist die an der erfindungsgemäßen Silber-Ruthenium-Oberfläche entwickelte Wasserstoffperoxid-Menge für unterschiedliche Ruthenium-Beschichtungen bestimmt worden. Für die Messung des gebildeten Wasserstoffperoxids wurden mit Silber und Ruthenium beschichtete Bleche (2,5 cm² groß) zu 10 ml einer Lösung von Eisen (II)-Ionen und Xylenolorange gegeben. Die Gefäße mit den Blechen wurden dann für eine Stunde bei 225 U/min auf dem Schüttler inkubiert. Durch die Bildung von Wasserstoffperoxid wurden die Eisen (II)-Ionen oxidiert. Die erzeugten Eisen (III)-Ionen bilden mit Xylenolorange unmittelbar einen farbigen Komplex, dessen Konzentration photometrisch bei einer Wellenlänge von 585 *nm* bestimmt wurde. Wie aus dem ermittelten Kurvenverlauf zu sehen ist, wird bereits bei geringer Ruthenium-Belegung der Silberoberfläche ein hoher H₂O₂-Wert gemessen, der bei höheren Ruthenium-Belegungen der Silberoberfläche einen nahezu konstanten Wert erreicht, der mit weiter steigender Ruthenium-Menge langsam abfällt.

In **Figur 3 b** ist die an der erfindungsgemäßen Silber-Ruthenium-Oberfläche gebildete Hydroxylradikal-Konzentration in Abhängigkeit von der Ruthenium-Belegung der Silberoberfläche dargestellt. Für den Nachweis der gebildeten Hydroxyl-Radikale wurde ein fluorimetrisches Verfahren verwendet. Die Methode basiert darauf, dass sich unter Anwesenheit von OH*-Radikalen aus Terephthalsäure (TPA) die fluoreszenzaktive 2-Hydroxyterephthalsäure (HTPA) bildet, die dann fluorimetrisch erfasst werden kann. Die Ansätze wurden im Spektralfluorometer vermessen, wobei zunächst eine Anregung bei 310 nm erfolgte. Die Fluoreszenz der HTPA war danach bei 412 nm messbar. Für die Messung der an Silber-Ruthenium beschichteten Blechen gebildeten OH*-Radikale wurde eine 0,5 mmol/l TPA-Lösung in Phosphatpuffer hergestellt und 0,0165 g/l NaCl hinzugefügt. Die Silber-Ruthenium-Bleche (2,5 cm2) wurden für 72 Stunden in 10 ml der TPA-Lösung inkubiert. Dabei wurde permanent bei 225 rpm gerührt. Wie in **Figur 3 b** zu erkennen, wird bereits bei geringer Ruthenium-Belegung der Silberoberfläche eine hohe OH*-Radikal-Konzentration gemessen, die jedoch deutlich kleiner als die H₂O₂-Konzentration ausfällt. Die Hydroxylradikale besitzen allerdings ein sehr hohes Oxidationspotential. Mit steigender Ruthenium-Belegung der Silberoberfläche nimmt die Hydroxyl-Konzentration ebenfalls langsam ab.

In **Tabelle 1** sind die Keimabtötungsergebnisse mit einer Silber-Ruthenium-Beschichtung nach Ph. Eur. 5.1.3 *Efficay of Antimicrobial Preservation* an vier charakteristischen Testkeimen wiedergegeben:
- *Pseudomonas aeruginosa* (ATCC 9027)
- *Staphylococcus aureus* (ATCC 6538)
- *Candida albicans* (ATCC 10231)
- *Aspergillus brasiliens* (ATCC 16404).

**Tabelle 1:**

| **Tested bacteria and fungi** | **Sample ID** | **0 - value (KBE/g)** | | **Time** | | | | |
|---|---|---|---|---|---|---|---|---|
| | | | | **6 h** | **24 h** | **7 d** | **14 d** | **28 d** |
| **Peudomonas aeroginosa** (ATCC 9027) | Blank | 160000 | Reisolation (KBE/mL) | > 1 Mio. | > 1 Mio. | > 4.2 Mrd. | 36,000,000 | - |
| | | | Reduction (log steps) | 0.0 | 0.0 | -3.6 | 0.0 | - |
| | Preservation with AgX | 160000 | Reisolation (KBE/mL) | 0 | 0 | 0 | 0 | - |
| | | | Reduction (log steps) | 5.2 | 52 | 5.2 | 5.2 | - |
| **Staphylococcus aureus** (ATCC 6538) | Blank | 280000 | Reisolation (KBE/mL) | 210000 | 190000 | < 100 | < 100 | - |
| | | | Reduction (log steps) | 0.1 | 0.2 | ≥ 3.5 | ≥ 3.5 | - |
| | Preservation with AgX | 280000 | Reisolation (KBE/mL) | 0 | 0 | 0 | 0 | - |
| | | | Reduction (log steps) | 54 | 5.4 | 5.4 | 5.4 | - |
| **Candida albicans** (ATCC 10231) | Blank | 210000 | Reisolation (KBE/mL) | n.d. | n.d. | 4100 | 89000 | - |
| | | | Reduction (log steps) | n.d. | n.d. | 1.7 | 0.4 | - |
| | Preservation with AgX | 210000 | Reisolation (KBE/mL) | n.d. | n.d. | 0 | 0 | - |
| | | | Reduction (log steps) | n.d. | n.d. | 53 | 0 | |
| **Aspergillus brasillens** (ATCC 16404) | Blank | 170000 | Reisolation (KBE/mL) | n.d. | n.d. | 44000 | 34000 | |
| | | | Reduction (log steps) | n.d. | n.d. | 0.6 | 07 | |
| | Preservation with AgX | 170000 | Reisolation (KBE/mL) | n.d. | n.d. | 0 | 0 | |
| | | | Reduction (log steps) | n.d. | n.d. | 5.2 | 5.2 | |

Die Versuche wurden an einem runden Edelstahlgewebe (V2A) (Durchmesser 20 mm) mit einer Maschenweite von 50 µm, das mit der erfindungsgemäßen Silber-Ruthenium-Beschichtung ausgerüstet war, in einer mit 10 ml gefüllten deionisierten Wasser-Lösung mit Zusatzstoffen (3,2 mg Methocel E 4M Premium, 45 mg Sorbit (low endotoxines), 6,1 mg Di-Natriumhydrogenphosphat Decahydrat, 0,75 mg Natriumdihydrogenphosphat) durchgeführt. Dabei wurde das Gewebe auf den Boden des Gefäßes gelegt und das Gefäß mit der antiseptisch beschichteten Probe nur zu Versuchsbeginn und vor der Probenahme geschüttelt. Ansonsten lag das antiseptisch beschichtete Gewebe auf dem Gefäßboden und sollte die zugegebenen Mikroorganismen reduzieren und die Lösung keimfrei halten. Jeder Keim wurde in 6 unabhängigen Versuchen gegen die erfindungsgemäße antiseptische Beschichtung getestet. Außerdem wurde jeweils begleitend ein Versuch ohne das erfindungsgemäß beschichtete Gewebe als Kontrolle mit dem jeweiligen Keim durchgeführt. Wie die Ergebnisse in **Tabelle 1** zeigen, sind *Pseudomonas aeruginosa* und *Staphylococcus aureus* bereits nach 6 h um > 5 log-Stufen reduziert und werden über weitere 14 Tage auf gleicher Stufe keimfrei gehalten. Bei *Candida albicans* und *Aspergillus brasiliens* wurde eine Keimabreicherung von >5 log-Stufen erst nach 1 Woche Versuchsdauer gemessen. Die Ergebnisse zeigen, dass das erfindungsgemäße antiseptische Mittel (antimikrobielle Beschichtung) alle Kriterien erfüllt, die nach der Ph. Eur. 5.1.3 verlangt werden und die hohe antiseptische Effizienz des erfindungsgemäßen Beschichtungssystems demonstriert.

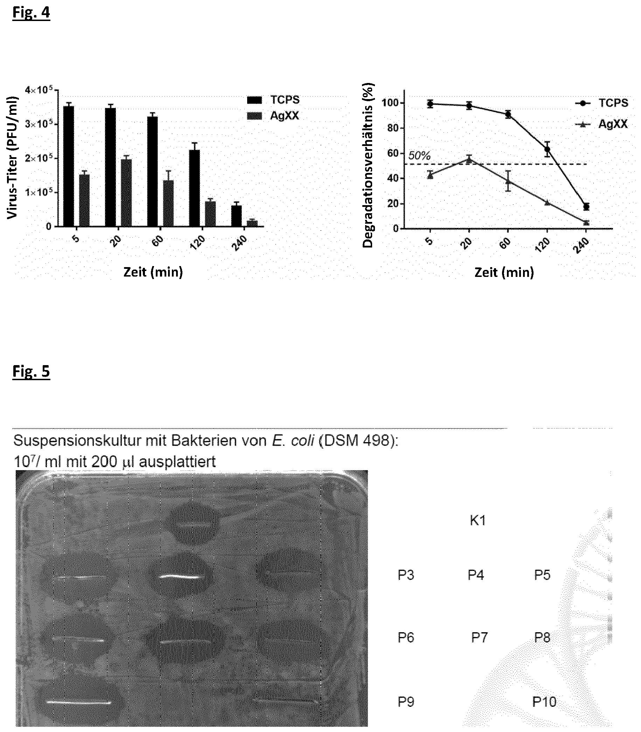

Die **Figur 4** zeigt das zeitlich aufgelöste Plaque-Reduktionsassay der Silber-Ruthenium-PVD-Beschichtung auf Polypropylen gegen den Feline Coronavirus (FCoV). Virus-Plaque-Tests bestimmen die Anzahl der Plaque-bildenden Einheiten (pfu) in einer Virusprobe, die ein Maß für die Virusmenge ist. Dieser Assay basiert auf einer mikrobiologischen Methode, die in Petrischalen oder Multiwell-Platten durchgeführt wird. Ein viraler Plaque wird gebildet, wenn ein Virus eine Zelle innerhalb der fixierten Zell-Monolage infiziert. Die virusinfizierte Zelle lysiert und die Infektion wird auf benachbarte Zellen übertragen, wo sich der Infektion-Lyse-Zyklus wiederholt. Der infizierte Zellbereich bildet eine Plaque (ein Infektionsbereich, der von nicht infizierten Zellen umgeben ist), die mit einem Lichtmikroskop oder visuell sichtbar gemacht werden kann. Plaques werden manuell gezählt, und die Ergebnisse in Kombination mit dem Verdünnungsfaktor, der zur Vorbereitung der Platte verwendet wird, zur Berechnung der Anzahl der Plaquebildungseinheiten pro Probeneinheitsvolumen (pfu/mL) angewendet. Das pfu/mL-Ergebnis stellt die Anzahl infektiöser Partikel innerhalb der Probe dar und basiert auf der Annahme, dass jede gebildete Plaque repräsentativ für ein infektiöses Viruspartikel ist. TCPS ist die Kontrolle bei der das Virus direkt auf dem well-plate inkubiert wurde.

VeroE6-Zellen werden in 12-Well-Platten 1-2 Tage kultiviert bis zur Konfluenz. Die verdünnte Viruslösung wird auf ~500 PFU/mL in Zellkulturmedium hergestellt und davon 500 µL auf die Silber-Ruthenium-Beschichtungsoberfläche bzw. dem well-plate ohne Probe gegeben und bei RT inkubiert. Proben des Mediums werden in zeitlichen Abständen entnommen und auf die Zellen auftragen und bei RT 45 min inkubiert. Die Zellen werden einmal mit PBS gewaschen, um das Medium zu entfernen. Die Zellen werden im Overlay-Medium für 2-3 Tage kultiviert und anschließend mit IF-Färbung versetzt und die Plaques ausgezählt. Der Plaque-Reduktionsassay zeigt, dass die Silber-Ruthenium-PVD Beschichtung die Menge an Feline Coronaviren (FCoV) bereits nach 5 Minuten deutlich reduziert hat. Nach ca. 30 min sind mehr als 50% der Viren deaktiviert.

**Figur 5****:** Um die Verminderung der antimikrobiellen Wirksamkeit der Silber-Ruthenium-Beschichtungen durch PG-Beschichtungen zu testen, wurden galvanisch Bleche (2x2 cm) erfindungsgemäß sequentiell mit Silber und dann Ruthenium beschichtet und anschließend mit 3 verschiedenen Polyglycerin (PG)-Schichtdicken besprüht. Die Silber-Ruthenium-Bleche wurden mit hPG _{5kDa}-(Catechol) _{10%} aufgesprüht als 1 mg/mL Lösung in MOPS Puffer (pH 8.5) und die Proben an Luft getrocknet und vorsichtig in VE-Wasser gewaschen. Mit Hilfe von Ellipsometrie-Messungen wurden die Schichtdicken der aufgesprühten PG-Schichten bestimmt:
PG (1 a, b)*: 35 nm ± 30 nm
PG (2 a, b): 100 nm ± 60 nm
PG (3 a, b): - (-300 nm)
PG (4) Silber-Ruthenium-Beschichtung ohne PG-Beschichtung.
*) je Probe 2 unabhängige PG-Beschichtungen (a, b) bei gleichen Spray-Zeiten.

Die mit PG beschichteten Proben (PG 1-3) wurden im Agar-Test mit E. *coli* Bakterien (DSM 498) auf ihre antimikrobielle Wirksamkeit geprüft und gegen die Silber-Ruthenium-Beschichtung ohne PG (PG (4)) verglichen. Wie anhand der Hemmhöfe abzulesen ist, wird bei allen drei PG-Schichtdicken (P3-8) im Vergleich zur unbeschichteten Silber-Ruthenium-Probe (P9) kein merklicher Unterschied in der Größe des Hemmhofes und damit in der antimikrobiellen Wirksamkeit festgestellt. PG-Nachbeschichtungen sind daher als Protein abweisende Schutzbeschichtung für eine erfindungsgemäße Wundauflage auf Basis einer Silber-Ruthenium-Beschichtung geeignet.

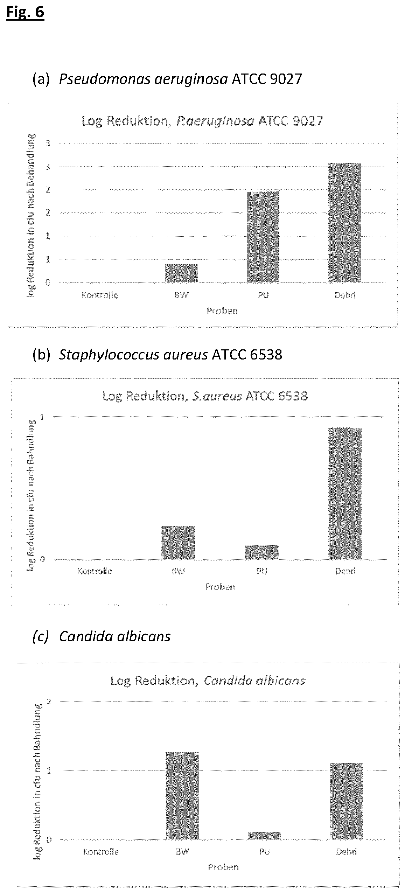

In **Figur 6** sind die Ergebnisse dargestellt, die an einem Biofilmmodell, das für Wundreinigungen verwendet wird, mit der erfindungsgemäßen Wundauflage mit Silber-Ruthenium-PVD-Beschichtung eines Polyesterfaservlies (Debri), eines Baumwollgewebes (BW) und eines offenporigen Polyurethanschaumes (PU) gewonnen worden sind. Das Biofilmmodell wurde speziell für diese Anwendung (Debridement) entwickelt. Daher wurde das erfindungsgemäß beschichtete antiseptische Polyesterfaservlies nicht auf dem Biofilm inkubiert, sondern ein biofilmzerstörender Effekt wurde direkt während des Debridements (~ 2 Minuten) evaluiert. Die Bakterien werden überschichtet und danach einem mechanischen Debridement ausgesetzt. Unmittelbar nach dem Debridement wurde die verbliebene Schicht homogenisiert und 1:10 verdünnt. Aus dieser 1:10 Verdünnung werden weitere Verdünnungen plattiert und die Bakterien ausgezählt, um die Keimreduktion nach dem Debridement zu ermitteln. Als Testkeime wurden:
- *Pseudomonas aeruginosa* (ATCC 9027)
- *Staphylococcus aureus* (ATCC 6538)
- *Candida albicans* (ATCC 10231)
eingesetzt. Die Ausgangskeimzahl von 10⁵ CFUs/mL sind realistische Keimbelastungen für eine besiedelte chronische Wunde.

Die Ergebnisse in **Figur 6 a-c** zeigen, dass nach dieser Testmethode bereits durch eine kurze Kontaktzeit (2 min) eines erfindungsgemäßen antiseptischen Mittels (Silber-Ruthenium-Beschichtung) mit dem künstlich hergestellten Biofilm eine deutliche Reduktion des Biofilms mit allen Trägermaterialien erreicht worden ist. Die gramnegativen *Pseudomonas aeruginosa* Bakterien sind beim Polyesterfaservlies-Trägermaterial um 3 log-Stufen reduziert worden **(****Figur 6 a****),** beim PU-Schaum um 2 log-Stufen **(****Figur 6 a****).** Die grampositiven *Staphylococcus aureus* Bakterien konnten mit dem Polyesterfaservlies (Debri) um 1 log-Stufe verringert werden **(****Figur 6 b****).** Auch bei der Entfernung des durch *Candida albicans* erzeugten Biofilms konnte eine Reduktion von z. T. > 1 log-Stufe erreicht werden **(****Figur 6 c****).** Die Unterschiede in den Keimzahlreduktionen sind neben den unterschiedlichen Keimarten auch auf die experimentelle Durchführung mit den verschiedenen Trägermaterialstrukturen zurückzuführen, die einen vollständig vergleichbaren Kontakt zum Biofilm nicht herstellen können.

Die Untersuchungsergebnisse der erfindungsgemäße Wundauflage mit Silber-Ruthenium-Beschichtung haben hinsichtlich der antiseptischen Wirksamkeit und der Fähigkeit, einen bestehenden Biofilm wieder partiell zurückbilden zu können, gezeigt, dass zwei wesentliche Merkmale einer wirksamen Wundauflage durch eine Silber-Ruthenium-Beschichtung erfüllt werden. Von einer modernen Wundauflage wird jedoch auch verlangt, dass sie die Wundheilung unterstützt, auf keinen Fall aber inhibiert. Um die Auswirkungen der erfindungsgemäßen Wundauflage auf die Reepithelisierung der Wunde zu untersuchen, wurden die Versuche ex vivo an nicht infiziertem humanen Wundmaterial von gesunden Freiwilligen aus der kosmetischen Chirurgie durchgeführt. Die entnommene Haut (1,5x1,5 cm) wurde so behandelt, dass eine Wunde von ca. 5 mm Durchmesser und ca. 1 mm Tiefe entstand. Die Hautexplantate wurden dann auf einen Einsatz (8 µm Poren) gelegt, und im unteren Kompartiment des Hautmodells wurden 2 mL 1640 RPMI-Zellkulturmedium mit Zusätzen hinzugefügt.

Die verletzte Haut wurde mit folgenden Polyesterfaservlies-Proben behandelt:
(a) Kontrolle = unbehandelte Wunde
(b) Ag = mit Silber aus der Gasphase beschichtetes Polyesterfaservlies (Ag-Schichtdicke ca. 350 nm)
(c) Ag-Ru = mit dem erfindungsgemäßen Silber und Ruthenium PVD beschichtetes Polyesterfaservlies (Ag: ca. 350 nm, Ru: ca. 60 nm)
(d) Ag-Ru-PG = mit dem erfindungsgemäßen Silber und Ruthenium PVD beschichtetes Polyesterfaservlies (Ag: ca. 350 nm, Ru: ca. 60 nm) + Polyglycerol (PG, ca. 200 nm)).

Die Wundauflagen wurden 30 Sekunden lang vor dem Auftragen auf die Wunde in PBS-Lösung eingetaucht. Die Proben wurden bei 37°C, 5 % CO2 und 100 % Luftfeuchtigkeit inkubiert. Nach 24 und 48 Stunden wurden 500 mL des Zellmediums gesammelt und durch frisches ersetzt. Entzündungsmarker (IL-6 und IL-8) wurden in dem nach 24 und 48 h gesammelten Medium mittels ELISA-Kits (CytoSetTM, Invitrogen Corp., Carlsbad, CA, USA) gemessen. Die Werte wurden normalisiert in Bezug auf den Gesamtgehalt an löslichem Protein, bestimmt durch das Pierce 660 nm-Protein-Assay (Thermo Scientific Inc., Rockford, IL, USA). Alle Kits wurden gemäß den Empfehlungen des Herstellers verwendet. Die Absorptionswerte wurden mit einem Plattenlesegerät (EnSpire1 Multimode Perkin Elmer, Akron, OH, USA) gemessen.

Nach 8 Tagen Inkubation (das Zellmedium wurde alle 2-3 Tage gewechselt) wurde die Haut in Gefriermedium eingebettet und in flüssigem Stickstoff eingefroren. Hautschnitte wurden präpariert und mit Hämatoxylin und Eosin (H&E) gefärbt, um die Zellmorphologie, Reepithelisierung und eventuelle Toxizität zu untersuchen.

In **Figur 7 a-d** sind die Wund-Epithelisierungs-Ergebnisse für die verschieden beschichteten Polyesterfaservlies-Wundauflagenmaterialien anhand von histologischen Schnitten wiedergegeben. In der unbehandelten Wunde **(****Figur 7 a****)** hatte sich an den Rändern der Wunde ein neues Epithel gebildet (Pfeil). In den mit der Silber-Wundauflage behandelten Proben wurde keine Regeneration einer neuen Epidermisschicht beobachtet. Es konnten fast nekrotische Zellen mit morphologisch veränderten Zellkernen beobachtet werden **(****Figur 7 b****).** Bei Wunden, die mit der erfindungsgemäßen Wundauflage mit Silber-Ruthenium-Beschichtung **(****Figur 7 c****)** sowie der erfindungsgemäßen Wundauflage mit Silber-Ruthenium-Beschichtung und zusätzlichem PG-Coating **(****Figur 7 d****)** behandelt wurden, wurden an den Wundrändern neue, sich bildende Zellschichten beobachtet (Pfeile), deren Wachstum ähnlich wie bei der unbehandelten Probe (Kontrolle) ist. Das bedeutet, dass die erfindungsgemäß antiseptisch beschichteten Polyesterfaservlies-Wundauflagen die Bildung eines neuen Epithels, im Gegensatz zu den Silber-Wundmaterialien, nicht blockiert. Interessanterweise wird durch eine zusätzliche, Protein abweisende, PG-Beschichtung die Epithelbildung ebenfalls nicht nachteilig gegenüber der Beschichtung ohne PG beeinflusst. Die überraschende bessere Verträglichkeit der erfindungsgemäßen Silber-Ruthenium-Wundauflage ist ein entscheidender Vorteil gegenüber den Silber-Wundauflagen, was besonders für großflächige Brandwunden gilt, wo bekannt ist, dass Silber zwar die Infektion verhindert, aber gleichzeitig toxisch Effekte auf die Haut und gegenüber andere Organen zeigt.

Voraussetzung für Untersuchungen von Wundinfektionen und der Suche nach neuen Wegen für deren Behandlung sind sinnvolle Modellsysteme. Maus-, Meerschweinchen-, Ratten- und Kaninchen-Modelle zählen zu den am häufigsten verwendeten *in vivo* Wundmodellen. Allerdings begrenzen die anatomischen und physiologischen Unterschiede im Vergleich zur menschlichen Haut die Brauchbarkeit als Modell für die Analyse eines realistischen Wundinfektionsgeschehens [Schaudinn et al 2017]. Ex vivo menschliche Haut, die aus der kosmetischen Chirurgie bezogen wird, kommt bereits seit Jahren für modellhafte Untersuchungen zur Hautphysiologie und Arzneimittelhautdurchlässigkeit zum Einsatz [Thompson et. al. 2015, Berthet et. al. 2017]. Auf dieser Basis wurden Studien an ex vivo menschlicher Haut für Untersuchungen von Haut-Immunzellen und deren Wechselwirkung mit topisch applizierten Nanopartikeln eingesetzt [Rancan et. al. 2014, Rancan et. al. 2017].

Das ex vivo menschliche Hautmodell der Charite' [Rancan 2019] wurde zur Untersuchung der erfindungsgemäßen antiseptischen Wundauflagen mit Silber-Ruthenium-Beschichtung verwendet, um die Wirkung der erfindungsgemäßen antiseptischen Beschichtung auf eine künstlich an menschlicher Haut hervorgerufene Wunde zu ermitteln. Überraschender Weise hat sich bei diesen Untersuchungen am Explantate-Wundmodell, das mit menschlicher Haut aus der kosmetischen Chirurgie arbeitet, gezeigt, dass eine erfindungsgemäße Wundauflage mit einem hybriden Schichtsystem aus einer Silberhalbleiter-Schicht und einer darüber befindlichen nano- bzw. mikroporösen Rutheniumoxid-Halbleiter-Schicht das Epithelwachstum, im Gegensatz zu Silberionen freisetzende Wundauflagen, nicht hemmt.

### Literatur

Barcikowski, St. (Center for Nanointegration, Uni Duisburg-Essen) und Stiesch, M. (Medizinische Hochschule Hannover): FAQ: Silber ist doch kein gut verträglicher Bakterienkiller: Interview zur Vorstellung der Studie "Das entzauberte Edelmetall"; 12. 9. 2012.
Berthet A, Spring P, Vernez D, Plateel G, Hopf NB. Ex vivo human skin permeation of methylchloroisothiazolinone (MCI) and methylisothiazolinone (MI). Arch Toxicol. 2017. https://doi.org/10.1007/s00204-017-1978-x PMID: 28470404.
Burd A, Kwok CH, Hung SC, Chan HS, Gu H, Lam WK, Huang L: A comparative study of the cytotoxicity of silver-based dressings in monolayer Cell, tissue explant, and animal models. Wound Repair Regen 2007 Jan- Feb;15(1): 94-104.
Demling, R. H. und DeSanti, L.: Wunden - Ein Kompendium der klinischen Forschung und Praxis Band 13, Nummer 1 Januar/Februar 2001, Ergänzungsband A: "Die Auswirkungen von Silber auf das Wundmanagement.
Edwards R and Harding K.G.: Bacteria and wound healing: Curr Opin Infect Dis 17:91-96, 2004.
Guggenbichler JP, Kramer A, Reichwagen S. Metalle und Metallverbindungen. In: Kramer A, Assadian O, editors. Wallhäußers Praxis der Sterilisation, Desinfektion, Antiseptik und Konservierung. Stuttgart: Thieme. 2008; p 841-852.
Innes ME, Umraw N, Fish JS, Gomez M, Cartotto RC. The use of silvercoated dressings on donor side wounds: a prospective, controlled matched pair study. Burns 2001; 27(6): 621-627.
Rancan F, Amselgruber S, Hadam S, Munier S, Pavot V, Verrier B, et al. Particlebased transcutaneous administration of HIV-1 p24 protein to human skin explants and targeting of epidermal antigen presenting cells. J Control Release. 2014; 176:115±22. https://doi.org/10.1016/j.jconrel.2013.12.022 PMID: 24384300.
Rancan F, Giulbudagian M, Jurisch J, Blume-Peytavi U, Calderon M, Vogt A. Drug delivery across intact and disrupted skin barrier: Identification of cell populations interacting with penetrated thermoresponsive nanogels. Eur J Pharm Biopharm. 2017; 116:4±11. https://doi.org/10.1016/j.ejpb.2016.11.017 PMID: 27865989.
Rancan, F.: Private Mitteilungen, 2019
Safferling, K., Sütterlin,Th., Westphal, K., Ernst, C., Breuhahn, K., James, M., Jäger, D., Halama, N., Grabe, N.: Wound healing revised: A novel reepithelialization mechanism revealed by in vitro and in silico models: J Cell Biol (2013) 203 (4): 691-709.
Schaudinn, Ch., Dittmann, Ch., Jurisch,J., Laue, M., GuEnday-TuE reli, N., Blume-Peytavi, U., Vogt, A., Rancan, F.: Development, standardization and testing of a bacterial wound infection model based on ex vivo human skin; PLOS ONE November 15, 2017.
Sen, C.K., Gordillo, G. M., Roy, S., Kirsner, R., Lambert, L., Hunt, TK, et.al.: Human skin wounds: A major and snowballing threat to public health and the economy. Wound Repair Regen. 2009; 17 (6): 763-71https://doi.org/11.11/j.1524-475X.2009.00543.x PMID: 19903300; PubMed Central PMCID: PMCPPMC2810192.
Thompson BC, Halliday GM, Damian DL. Nicotinamide enhances repair of arsenic and ultraviolet radiation-induced DNA damage in HaCaT keratinocytes and ex vivo human skin. PLoS One. 2015; 10(2): e0117491. https://doi.org/10.1371/journal.pone.0117491 PMID: 25658450; PubMed Central PMCID: PMCPMC4319842
Van den Plas D., De Smet K., Lens D. and Sollie P.: Differential cell death programmes induced by silver dressings in vitro; European journal of dermatology: EJD July 2008

## Patentansprüche

1. Hybride Wundauflage (1, 10, 20) zur Behandlung von Wunden der menschlichen oder tierischen Haut, die mindestens ein Trägermaterial (2, 12, 21) umfasst, das zumindest teilweise mit mindestens einem antiseptischen Mittel versehen ist, **dadurch gekennzeichnet, dass** das antiseptische Mittel zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen und dadurch eine antiseptische Wirkung entfalten.

2. Hybride Wundauflage nach Anspruch 1, **dadurch gekennzeichnet, dass** das Trägermaterial (2, 12, 21) eine Netz-, Loch-, Poren-, Faser- oder Gewebestruktur aufweist.

3. Hybride Wundauflage nach Anspruch 1 oder 2, **dadurch gekennzeichnet, dass** diese zusätzlich eine Flüssigkeit aufnehmende Schicht umfasst, vorzugsweise textile Flächenware, bevorzugt aus einem Vlies, Gewebe, Gewirk oder Filz.

4. Hybride Wundauflage nach einem der Ansprüche 1 bis 3, **dadurch gekennzeichnet, dass** das Trägermaterial (2, 12, 21) zumindest auf einer zur Wunde gerichteten Seite mit dem antiseptischen Mittel versehen ist und dass die Wundauflage zusätzlich eine Flüssigkeit aufnehmende Schicht umfasst, die auf der gegenüber liegenden, von der Wunde abgewandten Seite des Trägermaterials (2, 12, 21) angeordnet ist.

5. Hybride Wundauflage nach einem der Ansprüche 1 bis 4, **dadurch gekennzeichnet, dass** das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist.

6. Hybride Wundauflage nach einem der Ansprüche 1 bis 4, **dadurch gekennzeichnet, dass** das antiseptische Mittel einzelne Partikel umfasst, wobei mindestens ein Partikel die erste und die zweite Metallverbindung umfasst, und/oder wobei mindestens ein Partikel die erste Metallverbindung und mindestens ein anderes Partikel die zweite Metallverbindung umfasst.

7. Hybride Wundauflage nach einem der Ansprüche 1 bis 6, **dadurch gekennzeichnet, dass** das Übergangsmetallelement mindestens ein Metall aus der Gruppe bestehend aus Ruthenium, Iridium, Vanadium, Mangan, Nickel, Eisen, Cobalt, Cer, Molybdän und Wolfram ist.

8. Hybride Wundauflage nach einem der Ansprüche 1 bis 7, **dadurch gekennzeichnet, dass** die erste Metallverbindung mindestens ein Metalloxid, Metalloxyhydrat, Metallhydroxid, Metalloxyhydroxid, Metallhalogenid und/oder mindestens ein Metallsulfid des Übergangsmetallelements umfasst.

9. Hybride Wundauflage nach einem der Ansprüche 1 bis 8, **dadurch gekennzeichnet, dass** der Silberhalbleiter mindestens ein Silberoxid, Silberhydroxyd, Silberhalogenid und/oder Silbersulfid umfasst.

10. Hybride Wundauflage nach einem der Ansprüche 1 bis 9, **dadurch gekennzeichnet, dass** das antiseptische Mittel mit einer Protein abweisenden Beschichtung, insbesondere in Richtung Wunde, versehen ist.

11. Verfahren zur Herstellung einer hybriden Wundauflage mit antiseptischer Wirkung, insbesondere der hybriden Wundauflage nach einem der Ansprüche 1 bis 10, welches die folgenden Schritte umfasst:
a) Bereitstellen eines Trägermaterials,
b) zumindest teilweises Aufbringen einer ersten Metallschicht auf das Trägermaterial, und
c) zumindest teilweises Aufbringen einer zweiten Metallschicht auf die in Schritt b) aufgebrachte erste Metallschicht, wobei die zweite Metallschicht clusterförmig, nanoporös und/oder mikrorissig auf die erste Metallschicht aufgebracht wird.

12. Verfahren nach Anspruch 11, **dadurch gekennzeichnet, dass** auf mindestens einer Metallschicht eine Verbindungsschicht erzeugt wird, die mindestens eine Metallverbindung des entsprechenden Metalls umfasst, welche aus der Gruppe bestehend aus Oxiden, Halogeniden und Sulfiden ausgewählt ist.

13. Verfahren nach Anspruch 11 oder 12, **dadurch gekennzeichnet, dass** die Stärke der antiseptischen Wirkung durch ein Einstellen der Dicke mindestens einer der beiden Metallschichten, der Menge mindestens eines der beiden Metalle, und/oder der Flächenanteile der beiden Metalle auf der Trägermaterialoberfläche gezielt eingestellt wird.

14. Verfahren nach einem der Ansprüche 11 bis 13, **dadurch gekennzeichnet, dass** das jeweilige Metall sequenziell oder gleichzeitig mittels Abscheidung aus der Gasphase (PVD) oder chemisch-reduktiver Abscheidungs-Verfahren auf das Trägermaterial aufgebracht wird.

15. Verfahren nach einem der Ansprüche 11 bis 14, **dadurch gekennzeichnet, dass** die Metallschichten nach Schritt c) mit organischen Polymeren, vorzugsweise Polyglycerol (PG) oder Polyethylenglycol (PEG), modifiziert werden.

16. Verfahren nach einem der Ansprüche 11 bis 15, **dadurch gekennzeichnet, dass** die Schicht aus dem ersten Metall mit einer mittleren Schichtdicke von 500 nm, vorzugsweise 100 - 200 nm, vorzugsweise 50 - 100 nm, aufgebracht wird, und/oder dass die Schicht aus dem zweiten Metall mit einer mittleren Schichtdicke von höchstens 100 nm, vorzugsweise höchstens 50 nm, bevorzugt 2-20 nm, aufgebracht wird.

17. Verfahren nach einem der Ansprüche 11 bis 16, **dadurch gekennzeichnet, dass** das erste Metall Silber und das zweite Metall ein Metall aus der Gruppe bestehend aus Ruthenium, Iridium, Vanadium, Mangan, Nickel, Eisen, Cobalt, Cer, Molybdän und Wolfram ist, oder dass das erste Metall ein Metall aus der Gruppe bestehend aus Ruthenium, Iridium, Vanadium, Mangan, Nickel, Eisen, Cobalt, Cer, Molybdän und Wolfram und das zweite Metall Silber ist.

18. Verfahren nach einem der Ansprüche 11 bis 17, **dadurch gekennzeichnet, dass** das Aufbringen der Metallschichten mittels chemisch-reduktiver Beschichtungsverfahren erfolgt, vorzugsweise nach dem Spray-Coating-Verfahren, welches die folgenden Schritte umfasst: a) Spray-Coating-Beschichtung von Silber und Verwendung einer Silbernitratlösung und Verwendung eines Reduktionsmittels und b) nachfolgend Abscheidung von Ruthenium nach dem Spray-Coating-Verfahren, vorzugsweise durch Einsatz einer Ruthenium(III)-chlorid-Lösung und eines Reduktionsmittels.

19. Hybride Wundauflage (1, 10, 20) mit antiseptischer Wirkung, hergestellt in dem Verfahren nach einem der Ansprüche 11 bis 18.

20. Antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Verwendung bei der Behandlung von Wunden der menschlichen oder tierischen Haut.

21. Antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Anwendung in einem Verfahren zur topischen Behandlung von Wunden der menschlichen oder tierischen Haut durch Abdecken der Haut mittels einer Wundauflage.

22. Antiseptisches Mittel, das zumindest eine erste und eine zweite Metallverbindung umfasst, wobei die erste Metallverbindung mindestens eine Verbindung mindestens eines Übergangsmetallelements umfasst, das über mehrere Oxydationsstufen verfügt und über katalytisch aktive Zentren einen Wechsel der Oxidationsstufen erlaubt, und die zweite Metallverbindung mindestens einen elektrisch leitfähigen Silberhalbleiter umfasst, wobei die beiden Metallverbindungen zumindest mit ihren jeweiligen Oberflächen miteinander in elektrisch leitendem Kontakt stehen, zur Anwendung gemäß Anspruch 21, wobei das antiseptische Mittel mindestens zwei unterschiedliche Schichten umfasst, wobei ein erstes Metall, welches die erste Metallverbindung umfasst, als clusterförmige, nanoporöse und/oder mikrorissige Schicht zumindest teilweise auf eine Schicht eines zweiten Metalls, welches die zweite Metallverbindung umfasst, aufgebracht ist, oder wobei ein zweites Metall, welches die zweite Metallverbindung umfasst, als clusterförmige, nanoporöse und/oder mikrorissige Schicht zumindest teilweise auf eine Schicht eines ersten Metalls, welches die erste Metallverbindung umfasst, aufgebracht ist.
